# DEMANDE DE BREVET EUROPEEN

(11) **EP 4 573 907 A1**
(43) Date de publication de la demande: **25.06.2025**
(21) Numéro de dépôt: 23307310.5
(22) Date de dépôt: 21.12.2023
(51) Int. Cl.: A01P 3/00, A01P 21/00, A01N 37/02, A01N 63/30, A01N 63/10, A01N 43/16

(54) **ACIDE BUTYRIQUE, SEL D'ACIDE BUTYRIQUE OU DERIVE D'ACIDE BUTYRIQUE POUR LA STIMULATION ET/OU DESINHIBITION DES REPONSES IMMUNITAIRE DES PLANTES ET/OU LE TRAITEMENT D'INFECTIONS DE PLANTES**

(71) Demandeur: Université de Bourgogne, 21078 Dijon (FR); Institut national de recherche pour l'agriculture, l'alimentation et l'environnement, 75338 Paris Cedex 07 (FR)
(72) Inventeur: BOURQUE, Stéphane, 25410 Saint-Vit (FR); AIME, Sébastien, 21000 Dijon (FR)
(74) Mandataire: Novagraaf Technologies

(57) **Abrégé**

La présente invention concerne l'utilisation d'acide butyrique ou d'un dérivé d'acide butyrique, ou de l'un de leurs sels pour la stimulation et/ou désinhibition des réponses immunitaires des plantes, un procédé de traitement d'une infection de plante comprenant l'administration d'acide butyrique ou d'un dérivé d'acide butyrique, ou de l'un de leurs sels et optionnellement d'au moins un stimulateur de défense des plantes (SDP). La présente invention se rapporte également à un kit phytosanitaire comprenant de l'acide butyrique ou d'un dérivé d'acide butyrique, ou de l'un de leurs sels pour la stimulation et/ou désinhibition des réponses immunitaires des plantes.

La présente invention trouve des applications notamment dans le domaine pharmaceutique, phytopharmaceutique, agronomique, agroalimentaire et chimique.

## Description

### Domaine technique

La présente invention se rapporte à l'utilisation d'acide butyrique ou d'un dérivé d'acide butyrique, ou de l'un de leurs sels pour la stimulation et/ou désinhibition des réponses immunitaires des plantes. La présente invention se rapporte également à un procédé de traitement d'une infection de plante comprenant l'administration d'acide butyrique ou d'un dérivé d'acide butyrique, ou de l'un de leurs sels et optionnellement d'au moins un stimulateur de défense des plantes (SDP). La présente invention se rapporte également à un kit phytosanitaire comprenant de l'acide butyrique ou d'un dérivé d'acide butyrique, ou de l'un de leurs sels pour la stimulation et/ou désinhibition des réponses immunitaires des plantes

La présente invention trouve des applications notamment dans le domaine pharmaceutique, phytopharmaceutique, agronomique, agroalimentaire et chimique.

Dans la description ci-dessous, les références entre crochets ([ ]) renvoient à la liste des références présentée à la fin du texte.

### État de la technique

La protection des plantes, en particulier des cultures, d'infections par des agents pathogènes, par exemple des champignons, des oomycètes, des bactéries et/ou des virus est une préoccupation permanente dans le domaine agricole. L'immunité végétale fait l'objet de nombreux travaux tant sur le plan fondamental afin d'en décrypter les mécanismes, que sur le plan appliqué pour l'exploiter dans des stratégies de protection des cultures. Il y a en effet une forte attente de solutions alternatives aux pesticides de synthèse, comme les produits de biocontrôle (dont des SDP : Stimulateurs de Défenses des Plantes), pour des raisons environnementales et sanitaires.

Dans le cadre du plan Ecophyto des approches ont été menées pour réduire les doses de pesticides utilisées en agriculture, avec l'utilisation de SDP à même d'activer le système immunitaire de la plante, et ainsi de la rendre plus tolérante voire résistante à divers stress biotiques. Toutefois, les nombreux essais menés à ce jour notamment dans les Chambres d'Agriculture et les Instituts Techniques ont démontré une efficacité insuffisante, peu reproductible.

Aussi, il existe un réel besoin de trouver un moyen permettant avantageusement d'induire une résistance des plantes à des agents pathogènes avec une bonne efficacité et une bonne reproductibilité.

Dans cette démarche, des extraits de plantes ou de substances minérales ont été utilisés sans identifier un éventuel « principe actif », et/ou des « principes actifs » peu ou pas pénétrants. Les SDP, à l'inverse des pesticides de contact, doivent passer la barrière cuticulaire et les parois cellulaires pour induire les réponses de défense de la plante.

Aussi, il existe un réel besoin de trouver un moyen permettant avantageusement d'induire une résistance des plantes à des agents pathogènes avec une bonne efficacité et une reproductibilité suffisante, notamment avec des composés susceptibles de passer la barrière cuticulaire et les parois cellulaires de cellules de plantes.

Des composés hydrophiles tels que des polymères glucidiques ou des protéines ont été utilisés. Si ces composés sont efficaces lorsqu'ils sont utilisés dans des conditions contrôlées et / ou injectés directement dans les feuilles des plantes à traiter, toutefois ils sont inefficaces ou avec une efficacité non significative lorsqu'ils sont utilisés en plein champ.

Aussi, il existe un réel besoin de trouver un moyen permettant avantageusement d'induire une résistance des plantes à des agents pathogènes avec une bonne efficacité, une bonne reproductibilité notamment lors de l'utilisation en plein champs.

Il est également connu que l'activation des réponses immunitaires des plantes est principalement dépendante de l'activation de voies de signalisation spécifiques : production de formes actives de l'oxygène, de monoxyde d'azote (NO), modifications post-traductionnelles de protéines, activation de gènes de défense, etc. Ces voies sont activées après perception de motifs moléculaires de type MAMP (Motif moléculaire associé aux microbes, « Microbe Associated Molecular Pattern » en anglais) ou DAMP (Motif moléculaire associé aux dommages, « Damage Associated Molecular Pattern » en anglais) par des récepteurs de type PRR (Récepteurs de reconnaissance des formes « Pattern Recognition Receptors » en anglais ; Jones and Dangl, 2006 [1]). Une description des réponses de défense a été effectuée chez le tabac et la vigne (Garcia-Brugger et al. 2006 [2], Héloir et al. 2019 [3]) et une identification de différents SDP et récepteurs (Krzyzaniak et al. 2018 [4], Brulé et al. 2019 [5]) a été également effectuée.

De nombreux SDP de type MAMP ou DAMP sont connus et permettent notamment d'induire une résistance des plantes à des agents pathogènes en conditions contrôlées. Toutefois, l'efficacité de ces composés reste limitée, notamment lors de leur utilisation en plein champ.

Aussi, il existe un réel besoin de trouver un moyen permettant avantageusement d'induire une résistance des plantes à des agents pathogènes avec une bonne efficacité.

Il a été également démontré que l'intensité des réponses de l'immunité végétale était également dépendante, en plus des mécanismes d'action décrits précédemment, de la dérépression de ces mêmes réponses. Il a été montré qu'une famille d'histones désacétylases (HDAC) spécifiques aux plantes, les HDAC de type-2 ou HD2 (Grandperret et al. 2013 [6), Nicolas-Francès et al. 2018 [7]), sont des régulateurs négatifs de l'intensité des réponses de défense de la plante (Bourque et al. 2011-2016 [8-9]). Elles participent aux mécanismes épigénétiques de régulation de l'expression des gènes en désacétylant les histones, favorisant la transition de l'hétéro- vers l'euchromatine et permettant la régulation de l'expression des gènes cibles.

Toutefois, les SDP connus ont démontré une efficacité limitée, notamment dans la protection des plantes vis-à-vis d'agent pathogènes et/ou d'infections, ou dans la stimulation des réponses immunitaires des plantes. En particulier les SDP connus ont démontré une efficacité limitée, voir non significative notamment lors de leur utilisation en plein champ.

Aussi, il existe un réel besoin de trouver un moyen permettant avantageusement d'induire une résistance des plantes, notamment à des agents pathogènes avec une bonne efficacité. Il existe également un réel besoin de trouver un moyen permettant avantageusement le traitement d'infections de plantes avec une bonne efficacité.

### Exposé de l'invention

La présente invention a précisément pour but de répondre à ces besoins via l'utilisation d'acide butyrique ou d'un dérivé d'acide butyrique, ou de l'un de leurs sels.

Les inventeurs ont démontré de manière surprenante et inattendue que l'utilisation d'acide butyrique ou d'un dérivé d'acide butyrique, ou de l'un de leurs sels permet avantageusement et de manière surprenante de stimuler la réponse immunitaire de plantes.

Les inventeurs ont également démontré de manière surprenante que l'acide butyrique ou un dérivé d'acide butyrique, ou de l'un de leurs sels permet avantageusement et de manière surprenante une désinhibition des réponses immunitaires des plantes.

Les inventeurs ont démontré que l'acide butyrique ou un dérivé d'acide butyrique, ou de l'un de leurs sels permet avantageusement d'inhiber les d'histones désacétylases (HDAC).

En outre, les inventeurs ont démontré de manière surprenante que l'acide butyrique ou un dérivé d'acide butyrique, ou un de leurs sels, éventuellement combiné avec au moins un SDP, permet avantageusement d'activer, de manière ciblée, les gènes impliqués dans les réponses immunitaires.

En outre, les inventeurs ont démontré de manière surprenante que l'acide butyrique ou un dérivé d'acide butyrique, ou un de leurs sels, éventuellement combiné avec au moins un SDP, permet de traiter toute infection quel que soit l'agent pathogène. En particulier, les inventeurs ont démontré que la présente invention, de par l'activation de gènes impliqués dans les réponses immunitaires et/ou l'inhibition des HDAC, en particulier HDAC de type 2, permet une augmentation des réponses immunitaire des plantes et avantageusement un traitement des infections quel que soit l'agent pathogène responsable.

Dans la présente par « acide butyrique » on entend un composé de formule (CH₃-CH₂-CH₂-COOH).

Dans la présente par « dérivé d'acide butyrique » on entend tout dérivé connu de l'homme du métier adapté. Il peut s'agir par exemple d'un ester d'acide butyrique ou d'un acide hydroxybutyrique. Il peut s'agir par exemple d'un ester d'acide butyrique choisi parmi le méthyl et l'éthyl ester.

Dans la présente, le terme « sel » désigne des sels phytophysiologiquement acceptables, par exemple appropriés pour une utilisation phytosanitaire sans toxicité, irritation, réponse allergique ou autre effet délétère impropre à une utilisation, par exemple agricole.

Dans la présente par « sel d'acide butyrique » on entend tout sel d'acide butyrique connu de l'homme du métier et disponible dans le commerce. Il peut s'agir par exemple d'un sel de sodium, de calcium ou de potassium d'acide butyrique, de préférence d'un sel de sodium d'acide butyrique. Il peut s'agir par exemple du butyrate de sodium. Il peut s'agir du butyrate de sodium commercialisé par Carl Roth GmbH + Co KG sous la référence commerciale Sodium butyrate ≥98 %.

Dans la présente par « sel de dérivé d'acide butyrique » on entend tout sel d'acide butyrique connu de l'homme du métier. Il peut s'agir par exemple d'un sel de sodium, de calcium ou de potassium de dérivé d'acide butyrique. Il peut s'agir par exemple d'un sel de sodium, de calcium ou de potassium d'ester d'acide butyrique. Il peut s'agir du méthylbutyrate commercialisé par Carl Roth GmbH + Co KG sous la référence commerciale Butyrate de méthyl ROTICHROMO CPG. Il peut s'agir par exemple de l'éthylbutyrate commercialisé par Carl Roth GmbH + Co KG sous la référence commerciale Butyrate d'éthyle ROTICHROMO CPG. Il peut s'agir également par exemple d'un sel de sodium, de calcium ou de potassium d'acide hydroxybutyrique. Il peut s'agir par exemple du 3-Hydroxybutyrate de sodium. Il peut s'agir d'un sel de sodium d'acide hydroxybutyrique sodium commercialisé par Carl Roth GmbH + Co KG sous la référence commerciale Acide DL-3-hydroxybutyrique sel sodique ≥98 %.

Dans la présente par stimulation des réponses immunitaires on entend une augmentation de l'intensité des réponses immunitaires à un agent pathogène par exemple par inhibition des HDAC de type 2 ou HD2 et/ou stimulation de l'expression de gènes, par exemple les gènes STS (pour Stilbène synthase, Référence NCBI: XM_003634017.4), PAL (pour Phenylalanine amonia lyase, Référence NCBI : XM_002281763.5) et PR-3 (pour Pathogenesis related-3, Référence NCBI : NM_001281244.1) et/ou une activation des MAPK pour Mitogen-Activated Protein Kinase).

Dans la présente par désinhibition des réponses immunitaires on entend une augmentation de l'intensité des réponses immunitaires à un agent pathogène par exemple par inhibition des HDAC de type 2 ou HD2.

Dans la présente par plante on entend toute plante connue de l'homme du métier. Il peut s'agir de tout végétal vivant fixé en terre et dont la partie supérieure s'épanouit dans l'air ou dans l'eau douce. Il peut s'agir par exemple de plantes qui ont été modifiées par sélection, mutagenèse ou génie génétique. Les plantes génétiquement modifiées sont des plantes dont le matériel génétique a été modifié par l'utilisation de techniques d'ADN recombinant. L'utilisation de techniques d'ADN recombinant rend possible des modifications qui ne peuvent pas être facilement obtenues par croisement dans des circonstances naturelles, mutations ou recombinaison naturelle.

Dans la présente, les plantes peuvent être par exemple choisie dans le groupe comprenant les monocotylédones et les dicotylédones.

Dans la présente les plantes peuvent être par exemple des « plantes agricoles », par exemple des plantes dont une partie (telles que les graines) ou la totalité est récoltée ou cultivée à l'échelle commerciale ou qui servent de source importante d'aliments pour l'être humain ou les animaux, de nourriture, de fibres (par exemple coton, lin), de combustibles (par exemple bois, bioéthanol, biodiesel, biomasse) ou d'autres composés chimiques. Les plantes agricoles peuvent également inclure les plantes horticoles, c'est-à-dire les plantes cultivées dans les jardins (et non dans les champs), par exemple certains fruits et légumes. Les plantes agricoles peuvent être par exemple les céréales, par exemple le blé, le seigle, l'orge, le triticale, l'avoine, le sorgho ou le riz, la betterave, par exemple la betterave sucrière ou la betterave fourragère ; des plantes à fruits ou fruits, tels que des fruits à pépins, des fruits à noyau ou des fruits mous, par exemple des raisins, des pommes, des poires, des prunes, des pêches, des amandes, des cerises, des fraises, des framboises, des mûres ou des groseilles à maquereau ; les légumineuses, par exemple les lentilles, les pois, la luzerne ou le soja ; les plantes oléagineuses, telles que le colza, le colza, le canola, le lin, la moutarde, les olives, le tournesol, la noix de coco, les fèves de cacao, les plantes à huile de ricin, les palmiers à huile, les arachides ou le soja ; les cucurbitacées, par exemple les courges, les concombres ou les melons ; les plantes à fibres, par exemple le coton, le lin, le chanvre ou le jute ; les agrumes, par exemple les oranges, les citrons, les pamplemousses ou les mandarines ; les légumes, comme les épinards, la laitue, les asperges, les choux, les carottes, les oignons, les tomates, les pommes de terre, les cucurbitacées ou le paprika ; les plantes lauracées, par exemple l'avocat, la cannelle ou le camphre ; les plantes énergétiques et les matières premières, comme le maïs, le soja, le colza, le canola, la canne à sucre ou le palmier à huile ; le tabac ; des noisettes ; café ; thé ; bananes ; vignes, par exemple raisins de table et vignes à jus de raisin ; houblon ; gazon ; les plantes à caoutchouc naturel ou les plantes ornementales et forestières, par exemple les fleurs, les arbustes, les feuillus ou les conifères, par exemple les conifères.

Il peut s'agir de cultures fruitières par exemple de cultures de pommes, fraises, raisins et/ou agrumes, par exemple l'orange et le citron.

Il peut s'agir par exemple de brassicacées, par exemple *d'Arabidopsis thaliana.*

Il peut s'agir par exemple de plantes agricoles cultivées en plein champ, par exemple les pommes de terre, les betteraves sucrières, les céréales telles que le blé, le seigle, l'orge, l'avoine, le sorgho, le riz, le maïs, le coton, le colza, le colza oléagineux et le canola, les légumineuses par exemple le soja, les pois et féveroles, tournesols, canne à sucre ; plantes ornementales ; ou des légumes, par exemple les concombres, les tomates ou les oignons, les poireaux, la laitue, les courges. Il peut s'agir de plantes ligneuses, par exemple des essences ligneuses indigènes, de variétés de vignes *Vitis vinifera,* par exemple cultivées pour la production de raisin de tables ou de cuves, par exemple d'un cépage de *Vitis vinifera* choisi parmi l'abondant, abouriou, aléatico, alicante henri bouschet, aligoté, alphonse lavallée, altesse, alvarinho, araignan, aramon, aramon gris, aramon, aranel, arbane, arinarnoa, arriloba, arrouya, arrufiac, arvine, aubin, aubin vert, aubun, auxerrois, bachet, baco, barbaroux, baroque, béclan, béquignol, biancu gentile, dame, blanqueiron, bouchalès, bouillet, bouquettraube, bourboulenc, bouteillan, brachet, brun argenté, brun fourca, cabernet-franc, cabernet-sauvignon, caladoc, calitor, camaralet, carcajolo, carcajolo, cardinal rouge, carignan, carignan, carmenère, castets, césar, chambourcin, chardonnay, chasan, chasselas, chasselas, chatus, chenanson, chenin, cinsaut, clairette, clairette, clarin, claverie, codivarta, colobel, colombard, corbeau, cot, couderc, counoise, courbu, courbu, couston, crouchen, danlas, duras, durif, egiodola, ekigaïna, elbling, etraire de la dui, ferradou, fer-servadou, feunate, florental, folignan, folle he, franc de haute-saône, fuella nera, furmint, gamaret, gamay de bouze, gamay de chaudenay, gamay fréaux, gamay, ganson, garonnet, gascon, genovèse, gewurztraminer, goldriesling, gouget, graisse, gramon, grassen, grenache, grenache gris, grenache, gringet, grolleau gris, grolleau, gros manseng, gros vert, jacquère, joubertin, jurançon, jurançon, knipperlé, landal, lauzet, len de l'el, léon millot, liliorila, listan, lival, Iledoner pelut, macabeu, mancin, manseng, maréchal foch, marsanne, marselan, mauzac, mauzac, mayorquin, mècle, melon, mérille, merlot, merlot, meslier saint-françois, meunier, milgranet, molette, mollard, mondeuse he, mondeuse, monerac, montils, mornen, morrastel, mourvaison, mourvèdre, mouyssaguès, müller-thurgau, muresconu, muscadelle, muscardin, muscat à petits grains, muscat à petits grains rouges, muscat à petits grains, muscat cendré, muscat d'alexandrie, muscat de hambourg, muscat ottonel, négret de banhars, négrette, nielluccio, fleurien, oberlin, ondenc, orbois, pagadebiti, panse muscade, parellada, pascal, perdea, persan, petit brun, petit courbu, petit manseng, petit meslier, petit verdot, picardan, pineau d'aunis, pinot, pinot gris, pinot, piquepoul, piquepoul gris, piquepoul, plant de brunel, plant droit, plantet, portan, portugais bleu, poulsard, précoce bousquet, précoce de malingre, prunelard, raffiat de moncade, ravat, rayon d'or, ribol, riesling, riminèse, rivairenc, rivairenc gris, rivairenc, romorantin, du var, roublot, roussanne, roussette d'ayze, rubilande, sacy, saint-côme, saint-macaire, saint-pierre doré, sauvignon, sauvignon gris, savagnin, savagnin, sciaccarello, ségalin, sei, select, semebat, sémillon, servanin, servant, seyval, sylvaner, syrah, tannat, tempranillo, téoulier, terret, terret gris, terret, tibouren, tourbat, tressot, trousseau gris, trousseau, ugni, valdiguié, valérien, varousset, velteliner rouge précoce, verdelho, verdesse, vermentino, villard, villard, viognier. Il peut s'agir également de variétés issues de programme d'hybridation intra- ou interspécifiques et/ou sélectionnées pour leur résistance génétique, par exemple, à des stress biotiques ou abiotiques. Il peut s'agir par exemple des variétés Artaban, Floreal, Vidoc, Voltis, Coliris, Lilaro, Opalor, Sirano ou Selenor. Il peut s'agir de variétés obtenues par un procédé comprenant une hybridation intra- ou interspécifiques et optionnellement une sélection, par exemple tel que décrit par Schneider et al. 2019 [10].

Il peut s'agir de « Plantes sylvicoles » par exemple des arbres, par exemple des arbres utilisés dans le reboisement ou les plantations industrielles. Il peut s'agir par exemple de conifères, par exemple les pins, en particulier Pinus spec, le sapin et l'épicéa, l'eucalyptus, les arbres tropicaux comme le teck, l'hévéa, le palmier à huile, le saule (Salix), en particulier SaNx spec, le peuplier (cottonwood), en particulier Populus. spec, hêtre, en particulier spec Fagus, bouleau et chêne. Il peut s'agir d'une plante ornementale, par exemple des plantes couramment utilisées dans le jardinage, par exemple dans les parcs, les jardins et sur les balcons. Des exemples sont le gazon, le géranium, le pélargonia, le pétunia, le bégonia.

Les inventeurs ont également démontré de manière surprenante et inattendue que l'acide butyrique ou d'un dérivé d'acide butyrique, ou de l'un de leurs sels, éventuellement combiné avec au moins un SDP, permet avantageusement le traitement d'infections de plante.

La présente invention a également pour objet l'utilisation d'acide butyrique ou d'un dérivé d'acide butyrique, ou de l'un de leurs sels, pour le traitement d'une infection de plante.

Dans la présente par « traitement », on entend, par exemple au moins une application de la composition de l'invention, par exemple sous une forme telle que décrite précédemment, susceptible de prévenir ou d'arrêter une infection, par exemple par arrêt de la croissance de l'agent pathogène et/ou par mort de l'agent pathogène.

Dans la présente, par « agent pathogène », il est entendu un agent choisi dans le groupe comprenant les champignons, les oomycètes, les bactéries, les phytoplasmes, les virus et les levures. Il peut s'agir par exemple des champignons *Phaeomoniella chlamydospora, Phaeocremonium aleopholilum, Fomitiporia mediterranea, Strereum hirsutum, Phellinus igniarius, Eutypa lata, Botryosphaeria obtusa, Neofusicoccum parvum, Botryosphaeria dothidea, Botryosphaeria stevensii, Phomopsis viticole, Botrytis cinerea, Erysiphe necator, Guignardia bidwellii,* de l'oomycète *Plasmopara viticola.* De préférence *Plasmopara viticola et*/*ou Erysiphe necator.* Il peut s'agir par exemple de *Hyaloperonospora arabidopsidis NOCO2*

La présente a également pour objet une composition comprenant de l'acide butyrique ou un dérivé d'acide butyrique, et/ou de l'un de leurs sels. Il peut s'agir par exemple d'une composition pour usage agricole, une composition à usage vétérinaire, une composition médicale. Il peut s'agir par exemple d'une composition phytosanitaire.

Dans la présente, la composition peut être sous toute forme connue de l'homme du métier, par exemple adaptée pour un usage agricole. Par exemple la composition peut être sous une forme liquide, une émulsion, un onguent, une mousse, une pâte, une poudre ou un gel.

Dans la présente, la composition peut être fabriquée par toute méthode connue de l'homme du métier. Il peut s'agir par exemple d'un simple mélange, conduisant de préférence à une composition homogène.

Par « quantité efficace » on entend au sens de la présente description une quantité suffisante pour obtenir l'effet désiré, notamment pour permettre une stimulation des réponses immunitaires de plantes et/ou désinhibition de réponses immunitaires de plantes et/ou une diminution ou la disparition des maladies et/ou infection de la plante.

Dans la présente la concentration d'acide butyrique ou dérivé d'acide butyrique, ou l'un de leurs sels dans la composition phytosanitaire peut être comprise de 1 à 10 mM, par exemple de 1 à 2 mM.

Dans la présente la composition phytosanitaire peut comprendre en outre au moins un stimulateur de défense des plantes (SDP). Il peut s'agir de tout composé connu de l'homme du métier susceptible d'activer les mécanismes de défenses naturelles de plante. Il peut s'agir par exemple d'un composé reconnu par les plantes comme un signal initial d'une agression, soit comme un signal d'alerte intervenant dans la cascade de signalisation. Il peut s'agir par exemple d'un composé d'origine naturelle ou de synthèse conforme à la règlementation sur la mise sur le marché des produits phytopharmaceutiques : Règlement CE n°1107/2009 ou Règlement 2023/121. Il peut s'agir de tout composé SDP connu de l'homme du métier et disponible dans le commerce. Il peut s'agir par exemple d'un composé stimulateur de défense de plante référencé dans le catalogue de produits phytopharmaceutiques « e-phy » de l'agence nationale de sécurité sanitaire de l'alimentation, de l'environnement et du travail (ANSES) ou encore dans le catalogue « liste de EPPO A1 » et « liste de EPPO A2 » de l'Organisation européenne et méditerranéenne pour la protection des plantes (EPPO). Il peut s'agir par exemple du COS-OGA, principe actif du Messager commercialisé par la société Cérience ou de l'ABE IT 56, principe actif du Belvine commercialisé par la société Cérience.

Dans la présente la concentration dudit au moins un stimulateur de défense des plantes (SDP) dans la composition phytosanitaire peut être comprise de 0,01 à 3,25 g.L⁻¹, par exemple de 0,0254 à 3,25 g.L⁻¹, par exemple de 0,01 à 0,025 g.L⁻¹, par exemple de 1 à 3,25 g.L⁻¹. Par exemple lorsque ledit au moins un stimulateur de défense des plantes (SDP) est le COS-OGA, la concentration dans la composition phytosanitaire peut être comprise de 0,01 à 0,025 g.L⁻¹. Par exemple, lorsque ledit au moins un stimulateur de défense des plantes (SDP) est l'ABE IT 56 la concentration dans la composition phytosanitaire peut être comprise de 1 à 3,25 g.L⁻¹.

Dans la présente, la composition peut comprendre une ou plusieurs matières fertilisantes, pouvant être de natures variées, par exemple l'urée, le sulfate d'ammonium, le phosphate naturel, le chlorure de potassium, le sulfate d'ammonium, le nitrate de magnésium, le nitrate de manganèse, le nitrate de zinc, le nitrate de cuivre, l'acide phosphorique, et/ou l'acide borique.

La composition peut comprendre en outre au moins un pesticide. Il peut s'agir de pesticide(s) choisi(s) parmi les insecticides, fongicides, herbicides, parasiticides. Il peut s'agir par exemple d'un pesticide référencé dans le catalogue de produits phytopharmaceutiques « e-phy » de l'agence nationale de sécurité sanitaire de l'alimentation, de l'environnement et du travail (ANSES) ou encore dans le catalogue « liste de EPPO A1 » et « liste de EPPO A2 » de l'Organisation européenne et méditerranéenne pour la protection des plantes (EPPO). Par exemple, la composition selon l'invention peut comprendre un ou plusieurs fongicide(s) choisi(s) parmi le cuivre, le souffre. Il peut s'agir par exemple de pesticides disponibles dans le commerce, par exemple de pesticides, par exemple de synthèse, par exemple chimique, pour lesquels une Autorisation de Mise sur le Marché (AMM) a été délivrée. Il peut s'agir par exemple du Kocide 2000 commercialisé par la société COSACO GmbH, de l'Heliosoufre commercialisé par la société Action Pin. L'Homme du métier saura choisir le ou les pesticide(s) le/les plus adapté(s) à la plante à traiter.

Dans la présente, lors de l'utilisation selon l'invention la composition peut être apportée à la plante par voie foliaire ou par voie racinaire, de préférence par voie foliaire.

La présente invention a également pour objet un procédé de traitement d'une infection de plante comprenant les étapes de :
a) administration d'acide butyrique ou d'un dérivé d'acide butyrique, ou de l'un de leurs sels ou d'une composition phytosanitaire comprenant l'acide butyrique ou d'un dérivé d'acide butyrique, ou de l'un de leurs sels,
b) administration d'au moins un stimulateur de défense des plantes (SDP), dans lequel l'administration d'acide butyrique ou d'un dérivé d'acide butyrique, ou de l'un de leurs sels est préalable, simultanée ou concomitante à l'administration d'au moins un stimulateur de défense des plantes.

L'acide butyrique ou d'un dérivé d'acide butyrique, ou de l'un de leurs sels est tel que défini ci-dessus.

La composition phytosanitaire comprenant de l'acide butyrique ou d'un dérivé d'acide butyrique, ou de l'un de leurs sels est tel que définie ci-dessus

Le stimulateur de défense des plantes (SDP) est tel que défini ci-dessus.

Dans la présente l'étape d'administration et/ou d'application d'acide butyrique ou d'un dérivé d'acide butyrique, ou de l'un de leurs sels ou d'une composition phytosanitaire comprenant l'acide butyrique ou d'un dérivé d'acide butyrique, ou de l'un de leurs sels à la plante peut être réalisée par tout procédé et/ou moyen adapté connu de l'homme du métier. Par exemple l'application peut être effectuée par aspersion de la plante, arrosage, brumisation, badigeonnage, immersion, saupoudrage.

Dans la présente, l'administration et/ou l'application d'acide butyrique ou d'un dérivé d'acide butyrique, ou de l'un de leurs sels ou d'une composition phytosanitaire comprenant l'acide butyrique ou d'un dérivé d'acide butyrique, ou de l'un de leurs sels à la plante peut être effectuée, avec des dispositifs divers, par exemple avec tout type de pulvérisateur agricole connu de l'homme du métier. L'homme du métier saura aisément déterminer le type de pulvérisateur susceptible d'être utilisé, par exemple il peut s'agir d'un pulvérisateur pneumatique à main.

Dans la présente, l'administration et/ou l'application d'acide butyrique ou d'un dérivé d'acide butyrique, ou de l'un de leurs sels ou d'une composition phytosanitaire comprenant l'acide butyrique ou d'un dérivé d'acide butyrique, ou de l'un de leurs sels à la plante peut être effectuée afin de maintenir une quantité constante d'acide butyrique ou d'un dérivé d'acide butyrique, ou de l'un de leurs sels ou de ladite composition au niveau de la plante, par exemple l'application peut être effectuée au moins, une fois par mois, une fois par semaine, ou une fois par jour. L'homme du métier saura aisément adapter l'application de la composition en fonction de la plante et/ou de la quantité constante à maintenir.

Dans la présente l'étape d'administration et/ou l'application d'au moins un stimulateur de défense des plantes (SDP) à la plante peut être réalisée par tout procédé et/ou moyen adapté connu de l'homme du métier. Par exemple l'application peut être effectuée par aspersion de la plante, arrosage, brumisation, badigeonnage, immersion, saupoudrage.

Dans la présente, l'administration et/ou l'application d'au moins un stimulateur de défense des plantes (SDP) à la plante peut être effectuée, avec des dispositifs divers, par exemple avec tout type de pulvérisateur agricole connue de l'homme du métier. L'homme du métier saura aisément déterminer le type de pulvérisateur susceptible d'être utilisé, par exemple il peut s'agir d'un pulvérisateur pneumatique à main.

Dans la présente, l'administration et/ou l'application d'au moins un stimulateur de défense des plantes (SDP) à la plante peut être programmée, par exemple via un dispositif de programmation automatique avec une application quotidienne, hebdomadaire, mensuelle.

Dans la présente, l'administration et/ou l'application d'au moins un stimulateur de défense des plantes (SDP) à la plante peut être effectuée afin de maintenir une quantité constante de composition au niveau de la plante, par exemple l'application peut être effectuée au moins, une fois par mois, une fois par semaine, ou une fois par jour. L'homme du métier saura aisément adapter l'application de la composition en fonction de la plante et/ou de la quantité constante à maintenir.

Dans la présente, la plante est telle que définie ci-dessus.

Dans la présente, lorsque l'administration et/ou l'application d'acide butyrique ou d'un dérivé d'acide butyrique, ou de l'un de leurs sels ou d'une composition phytosanitaire comprenant l'acide butyrique ou d'un dérivé d'acide butyrique, ou de l'un de leurs sels et dudit au moins un stimulateur de défense des plantes (SDP) sont successives, la posologie pour chaque administration peut être une administration et/ou application d'acide butyrique ou d'un dérivé d'acide butyrique, ou de l'un de leurs sels ou d'une composition phytosanitaire comprenant l'acide butyrique ou d'un dérivé d'acide butyrique, ou de l'un de leurs sels suivie de l'administration dudit au moins un stimulateur de défense des plantes (SDP). Par exemple, ledit au moins un stimulateur de défense des plantes (SDP) peut être administré immédiatement, c'est-à-dire de manière concomitante, ou par exemple de 1 minutes à quelques heures, par exemple de 1 minutes à 48 heure, de préférence de 5 min à 24 heures après l'administration et/ou application d'acide butyrique ou d'un dérivé d'acide butyrique, ou de l'un de leurs sels ou d'une composition phytosanitaire comprenant l'acide butyrique ou d'un dérivé d'acide butyrique, ou de l'un de leurs sels.

En d'autres termes, même si dans la présente description il est fait référence à une composition, on comprend bien que chacun des composés de la composition peut être administré concomitamment aux autres composés (par exemple dans une seule composition ou dans deux compositions, chacune de ces compositions comprenant un ou plusieurs des composants précités, le mode d'administration de chacun des composés ou composition(s) pouvant être identique ou différent), ou indépendamment les un des autres, par exemple successivement.

La présente invention a également pour objet un kit phytosanitaire destiné à être utilisé pour la stimulation et/ou désinhibition de la réponse immunitaire de plantes et/ou le traitement d'une infection de plante comprenant :
i. un acide butyrique ou un dérivé d'acide butyrique, ou l'un de leurs sels, ou une composition phytosanitaire comprenant un acide butyrique ou un dérivé d'acide butyrique, ou l'un de leurs sels et
ii. au moins un stimulateur de défense des plantes (SDP), ou une composition comprenant au moins un stimulateur de défense des plantes (SDP).

L'acide butyrique ou d'un dérivé d'acide butyrique, ou de l'un de leurs sels est tel que défini ci-dessus. Par exemple, le kit peut comprendre de l'acide butyrique ou un dérivé d'acide butyrique, ou de l'un de leurs sels utilisables par aspersion d'une composition phytosanitaire comprenant de 1 à 10 mM dudit acide butyrique ou dérivé d'acide butyrique, ou l'un de leurs sels.

Le stimulateur de défense des plantes (SDP) est tel que défini ci-dessus. Par exemple, le kit peut comprendre ledit stimulateur de défense des plantes (SDP) utilisable par aspersion d'une composition comprenant ledit stimulateur de défense des plantes (SDP) dans un délai de 0 minutes à 48h après la première aspersion dudit acide butyrique ou dérivé d'acide butyrique, ou l'un de leurs sels. Dans la présente, lorsque ladite composition comprenant ledit stimulateur de défense des plantes (SDP) est aspergée dans un délai de 0 minutes après la première aspersion dudit acide butyrique ou dérivé d'acide butyrique, ou l'un de leurs sels, l'aspersion de ladite composition et dudit acide butyrique ou dérivé d'acide butyrique, ou l'un de leurs sels sont concomitantes.

Dans la présente, le kit peut comprendre un support comportant des instructions pour l'emploi dudit acide butyrique ou un dérivé d'acide butyrique, ou l'un de leurs sels, et dudit au moins un stimulateur de défense des plantes. Le support comportant des instructions pour l'emploi dudit acide butyrique ou un dérivé d'acide butyrique, ou l'un de leurs sels, et dudit au moins un stimulateur de défense des plantes selon l'invention peut être un manuel ou une notice qui peut avoir notamment pour fonction d'expliquer à l'utilisateur la manière et la fréquence d'application.

Le kit phytosanitaire peut également comprendre un applicateur, par exemple un applicateur dynamique, par exemple manuel ou électrique.

D'autres avantages pourront encore apparaître à l'homme du métier à la lecture des exemples ci-dessous, illustrés par les figures annexées, donnés à titre illustratif.

### Brève description des figures

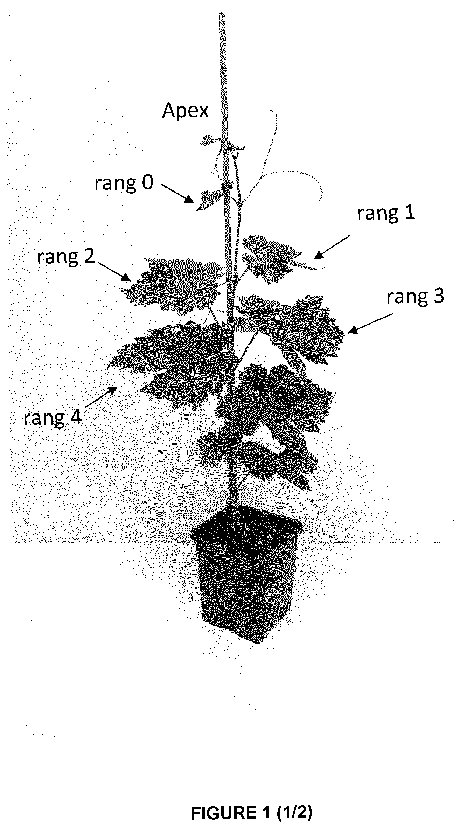

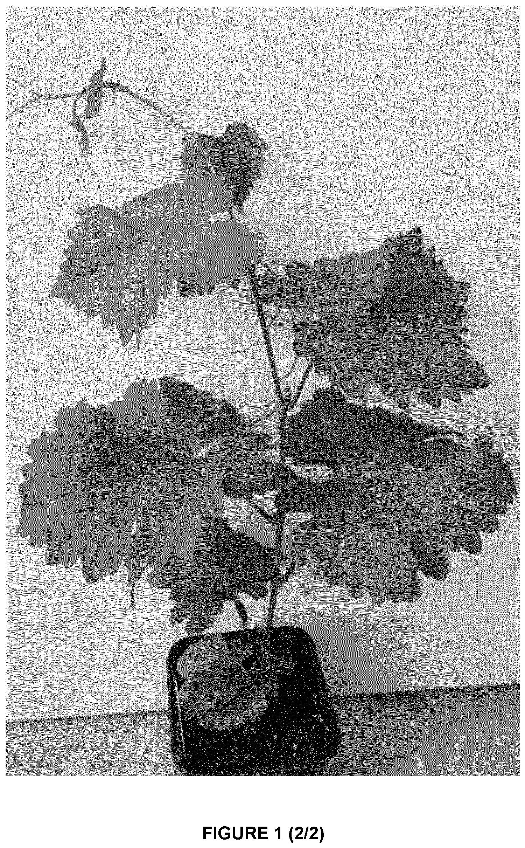

Figure 1 : La figure 1 représente un schéma et une photographie de la morphologie typique d'une bouture utilisée lors des essais cités dans les exemples. Les différents rangs désignent le numéro de la feuille en partant de l'apex de la bouture. Les rangs 1 et 2 désignent les feuilles utilisées lors des essais. Les feuilles rang 0, 3, 4 et l'apex n'ont pas été prises en compte dans l'étude.

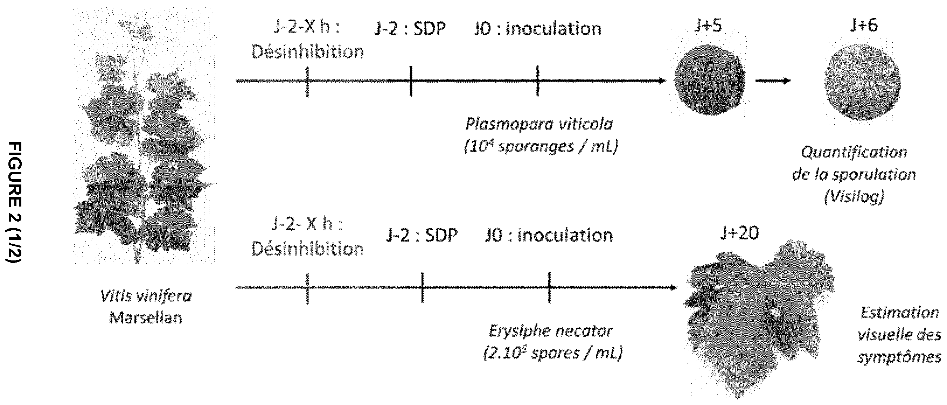

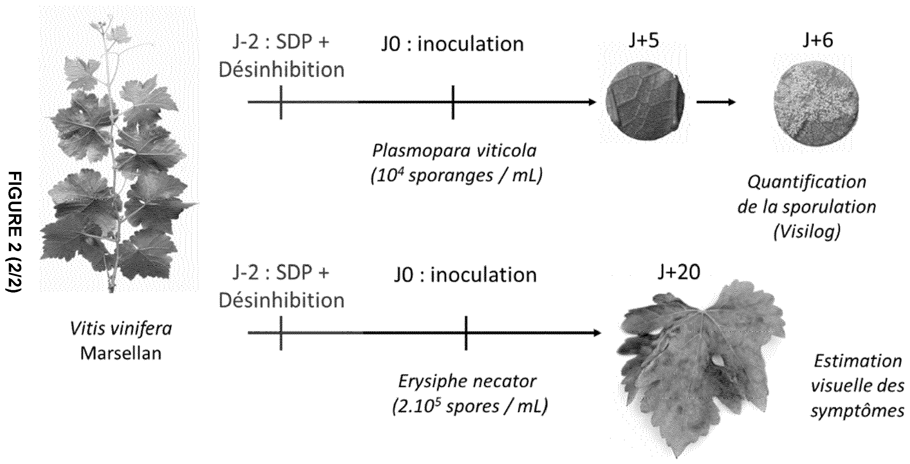

Figure 2 : La figure 2 représente une frise chronologique du protocole expérimental mis en oeuvre dans les essais des exemples. La figure (1/2) illustre l'approche dite de prétraitement. C'est-à-dire que la molécule désinhibitrice a été appliquées X heures avant le SDP, X pouvant varier de 2 à 48 h. La référence J-2 représente le jour d'application du SDP. La référence J0 correspond à l'infection des plantes par *P. viticola* ou *E*.
*necator.* J+5 correspond au 5ème jour, lorsque des disques foliaires ont été prélevés. Les symptômes de la maladie ont été mesurés à J+6 pour le mildiou (*P. viticola*) ou J+20 pour l'oïdium (*E*. *necator*)*.* La figure 2 (2/2) illustre le cas où la molécule désinhibitrice et le SDP ont été appliqués simultanément, c'est-à-dire qu'une même solution contenait les deux molécules qui ont été pulvérisées 2 jours avant l'infection des plantes.

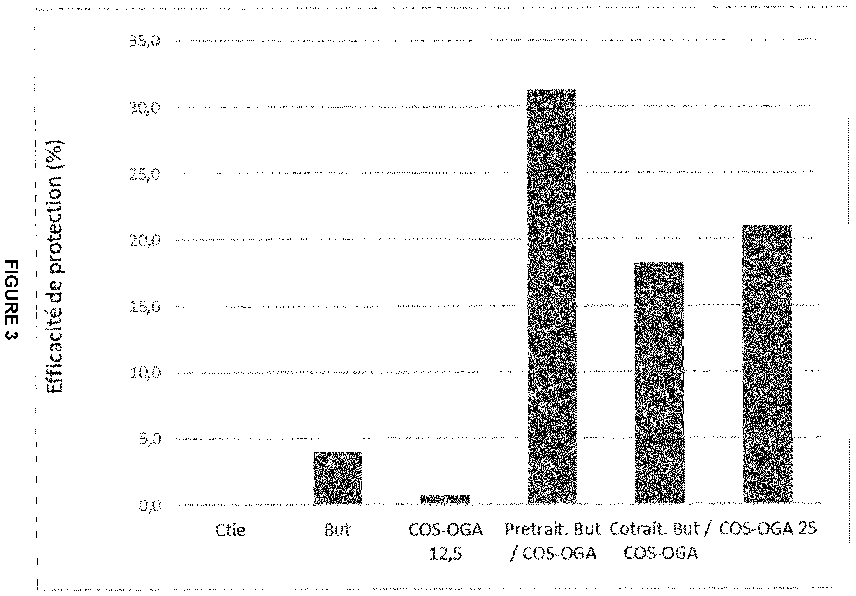

Figure 3 : La figure 3 représente un histogramme présentant l'efficacité de la protection induite contre *P. viticola* (en %), agent du mildiou de la vigne, en fonction des traitements réalisés. 6 traitements différents ont été testés (de gauche à droite) :
   - Contrôle (traitement avec de l'eau)
   - But (traitement avec 1 mM de butyrate de sodium seul au jour J0)
   - COS-OGA 12,5 (traitement avec une demi-dose de COS-OGA à 12,5 mg.L⁻¹. La dose homologuée pour les traitements au champ est de 25 mg.L⁻¹)
   - Pretrait. But / COS-OGA (prétraitement pendant 48 h avec 1 mM de butyrate de sodium puis traitement avec une dose de COS-OGA 12,5 mg.L⁻¹)
   - Cotrait. But / COS-OGA (traitement simultané avec 1 mM de butyrate de sodium et une dose de COS-OGA 12,5 mg.L⁻¹. Les deux molécules sont dissoutes dans la même solution)
   - COS-OGA 25 5 (traitement avec une pleine dose de COS-OGA à 25 mg.L⁻¹)
   Les valeurs ont été normalisées par rapport au contrôle (Ctle).
   Les valeurs présentées sont la moyenne de cinq expériences indépendantes et ont été exprimées en pourcentage de protection induite, 100 % de protection induite correspondant à une absence totale de développement de *P. viticola.*

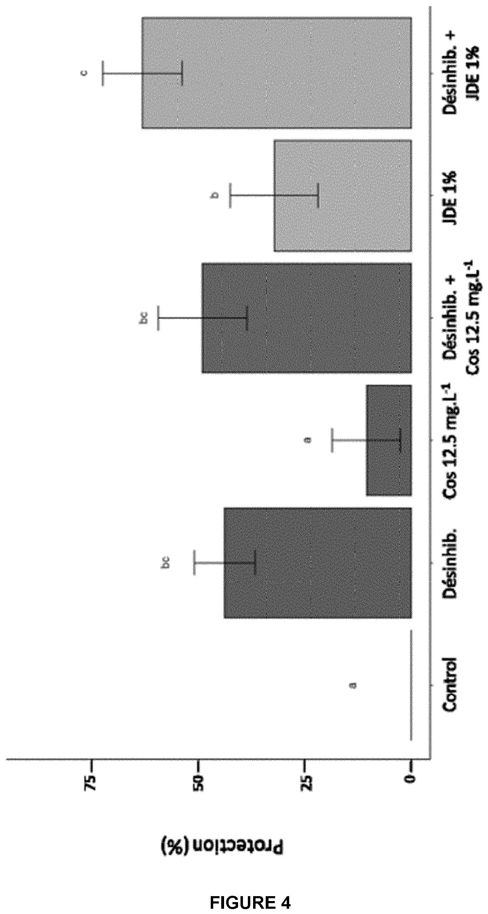

Figure 4 : la figure 4 représente un histogramme présentant l'efficacité de la protection induite contre *E*. *Necator* (en %), agent de l'oïdium de la vigne, en fonction des traitements réalisés. 6 traitements différents ont été testés (de gauche à droite) :
   - Ctle (Contrôle, traitement avec de l'eau)
   - COS-OGA 12,5 (traitement avec une demi-dose de COS-OGA à 12,5 mg.L⁻¹. La dose homologuée pour les traitements au champ est de 25 mg.L⁻¹)
   - But (traitement avec 1 mM de butyrate de sodium seul au jour J0)
   - Prétrait. But / COS-OGA (prétraitement pendant 48 h avec 1 mM de butyrate de sodium puis traitement avec une dose de COS-OGA 12,5 mg.L⁻¹)
   - ABE-IT 56 (traitement avec 3,25 g.L⁻¹de ABET-IT 56, principe actif du Belvine)
   - Prétrait. But / ABE-IT 56 (prétraitement pendant 48 h avec 1 mM de butyrate de sodium puis avec une dose de 3,25 g.L⁻¹de ABET-IT 56, principe actif du Belvine)
   Les valeurs ont été normalisées par rapport au contrôle (Ctle).
   Les valeurs présentées sont la moyenne de cinq expériences indépendantes et ont été exprimées en pourcentage de protection induite, 100 % de protection induite correspondant à une absence totale de développement de *E. Necator.*

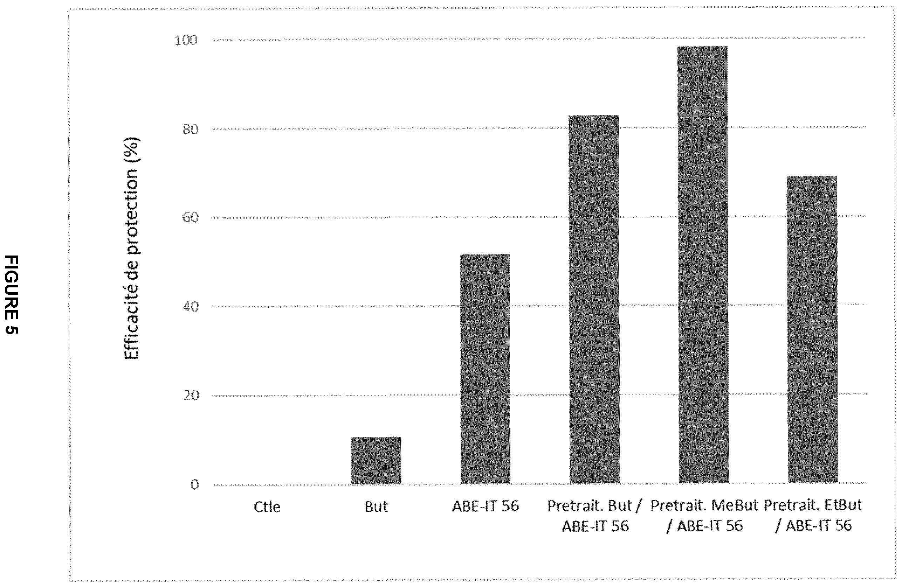

Figure 5 : La figure 5 présente un histogramme présentant la protection induite contre *E. necator,* agent de l'oïdium de la vigne par traitement de la plante avec l'ABE-IT 56 (principe actif du Belvine) et le butyrate de sodium et des esters du butyrate, à savoir le méthyl-butyrate et l'éthyl-butyrate. Ces valeurs sont représentatives de deux expériences indépendantes. Les résultats obtenus avec des esters du butyrate, à savoir le méthyl- et l'éthyl-butyrate. 6 traitements ont été appliqués (de gauche à droite) :
   - Contrôle (traitement avec de l'eau)
   - But (traitement avec 1 mM de butyrate de sodium seul au jour J0)
   - ABE-IT 56 (traitement avec une dose de 3,25 g.L⁻¹ d'ABE-IT 56, principe actif du Belvine)
   - Pretrait. But / ABE-IT 56 (prétraitement pendant 48 h avec 1 mM de butyrate de sodium puis avec une dose de 3,25 g.L⁻¹ d'ABE-IT 56)
   - Pretrait. MeBut / ABE-IT 56 (prétraitement pendant 48 h avec 1 mM de méthyl-butyrate puis avec une dose de 3,25 g.L⁻¹ d'ABE-IT 56)
   - Pretrait. EtBut / ABE-IT 56 (prétraitement pendant 48 h avec 1 mM d'éthyl-butyrate puis avec une dose de 3,25 g.L⁻¹ d'ABE-IT 56)

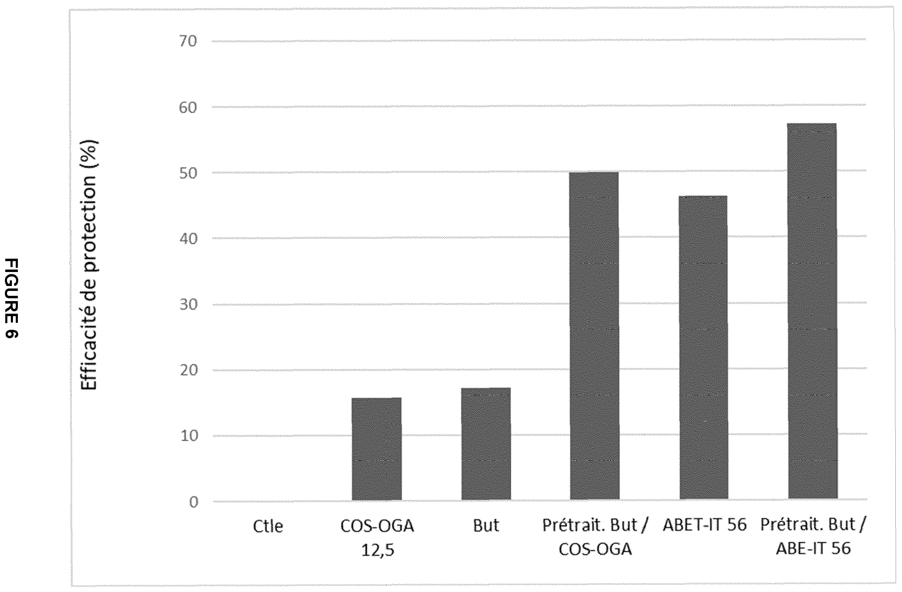

Figure 6 : La figure 6 représente un histogramme présentant la protection induite contre *H. aradibopsidis NOCO2,* agent du mildiou d'Arabidopsis en réponse à l'ABE-IT 56 (principe actif du Belvine) et au COS-OGA (principe actif du Messager) et au prétraitement par le butyrate de sodium. Ces valeurs sont représentatives de deux expériences indépendantes. Les modalités de traitement ont été (de gauche à droite) :
   - Ctle (traitement avec de l'eau)
   - COS-OGA 12,5 (traitement avec une demi-dose de 12,5 mg.L⁻¹ de COS-OGA)
   - But (traitement avec 1 mM de butyrate de sodium seul au jour J0)
   - Pretrait. But / COS-OGA (prétraitement pendant 48 h avec 1 mM de butyrate de sodium puis avec une demi-dose de 12,5 mg.L⁻¹ de COS-OGA)
   - ABE-IT 56 (traitement avec une dose de 3,25 g.L⁻¹ d'ABE-IT 56, principe actif du Belvine)
   - Pretrait. But / ABE-IT 56 (prétraitement pendant 48 h avec 1 mM de butyrate de sodium puis avec une dose de 3,25 g.L⁻¹ d'ABE-IT 56)

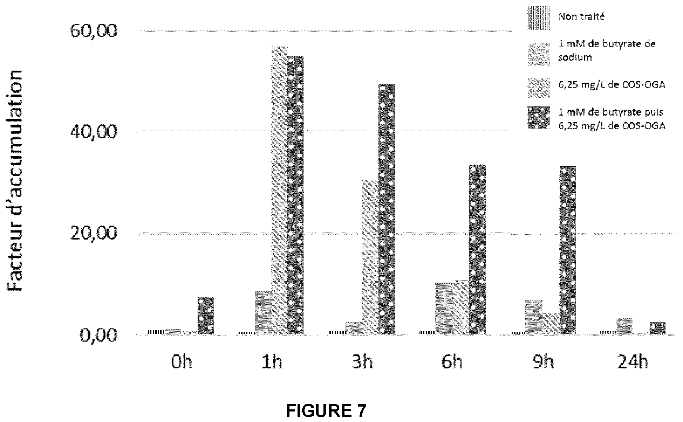

Figure 7 : La figure 7 représente un diagramme en bâton présentant l'accumulation de l'ARNm du gène STS codant la stilbène synthase dans des cellules de vigne dans leur milieu de culture sans traitement (hachures verticales grises et blanches 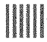 ), induite par 1 mM de butyrate de sodium (le milieu comprenant 1 mM de butyrate de sodium), (remplissage gris moyen 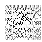 ), 6,25 mg.L⁻¹ de COS-OGA (hachures diagonales grises et blanches 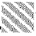 ) (le milieu comprenant 6,25 mg.L⁻¹ de COS-OGA), un cotraitement avec 1 mM de butyrate et 6,25 mg.L⁻¹ de COS-OGA (remplissage gris à pois blancs 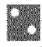 ) (le milieu comprenant 1 mM de butyrate de sodium et 6,25 mg.L⁻¹ de COS-OGA), en fonction du temps en heures.

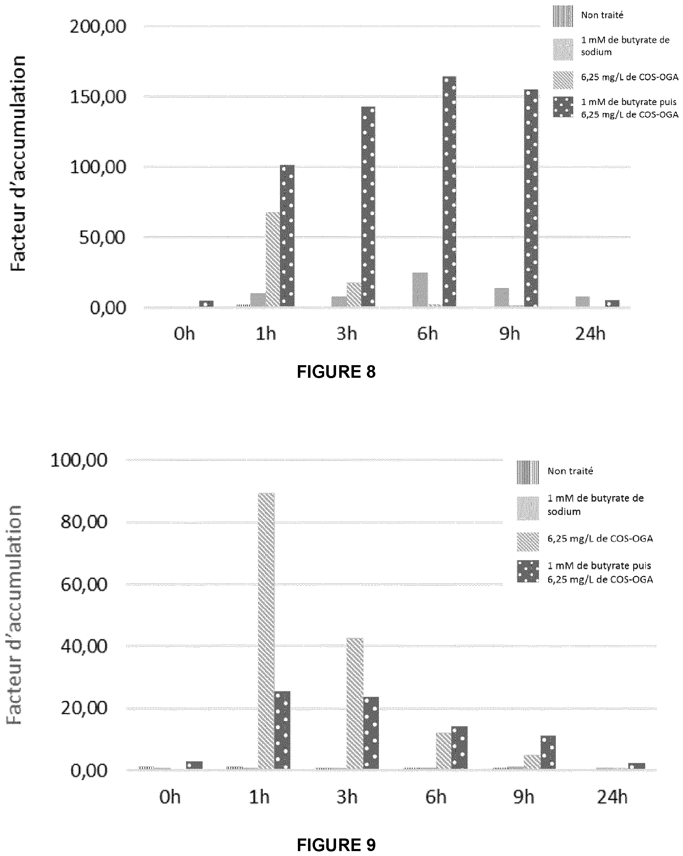

Figure 8 : La figure 8 représente un digramme en bâton présentant l'accumulation de l'ARNm du gène PAL codant la Phénylalanine Ammonia Lyase dans des cellules de vigne dans un milieu de culture sans traitement (hachures verticales grises et blanches 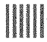 ), induite par 1 mM de butyrate de sodium (remplissage gris moyen 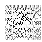 ) (le milieu comprenant 1 mM de butyrate de sodium), 6,25 mg.L⁻¹ de COS-OGA (hachures diagonales grises et blanches 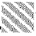 ) (le milieu comprenant 6,25 mg.L⁻¹ de COS-OGA), un cotraitement avec 1 mM de butyrate et 6,25 mg.L⁻¹ de COS-OGA (remplissage gris à pois blancs 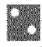 ) (le milieu comprenant 1 mM de butyrate de sodium et 6,25 mg.L⁻¹ de COS-OGA), en fonction du temps en heures.
Figure 9 : La figure 9 représente un digramme en bâton présentant l'accumulation de l'ARNm du gène PR-3 codant une chitinase dans des cellules de vigne dans un milieu de culture sans traitement (hachures verticales grises et blanches 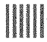 ), induite par 1 mM de butyrate de sodium (remplissage gris moyen 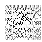 ) (le milieu comprenant à 1 mM de butyrate de sodium), 6,25 mg.L⁻¹de COS-OGA (hachures diagonales grises et blanches 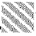 ) (le milieu comprenant 6,25 mg.L⁻¹ de COS-OGA), un cotraitement avec 1 mM de butyrate et 6,25 mg.L⁻¹de COS-OGA (remplissage gris à pois blancs 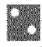 ) (le milieu comprenant 1 mM de butyrate de sodium et 6,25 mg.L⁻¹ de COS-OGA), en fonction du temps en heures.

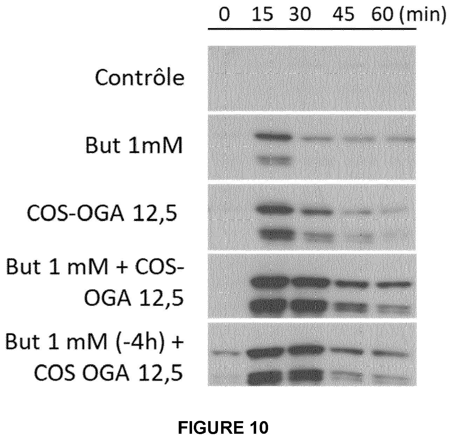

Figure 10 : photographie d'un western Blot obtenu à partir de protéines de cellules de vignes extraites après incubation pendant 0, 15, 30, 45 ou 60 min par des compositions comprenant respectivement : de l'eau seule (Contrôle), 1 mM de butyrate de sodium (But 1 mM), une demi-dose de 12,5 mg.L⁻¹ de COS-OGA (COS-OGA 12,5), 1 mM de butyrate de sodium et une demi-dose de 12,5 mg.L⁻¹de COS-OGA (But 1 mM + COS-OGA 12,5), 1 mM de butyrate de sodium 4 h avant le traitement par une demi-dose de 12,5 mg.L⁻¹ de COS-OGA (But 1 mM (-4h) + COS-OGA 12,5)

### Exemple

### Caractéristiques des SDP utilisés sur vigne :

Le COS-OGA (Chitooligosaccharides-Oligogalacturonic acid), principe actif du Messager (commercialisé par la société Cérience). Il est obtenu par l'association de deux SDP : le COS pour chitooligosaccharide (issus de la carapace de crustacés qui miment la paroi des champignons) et les OGA pour oligogalacturonides (issus de la pectine d'agrumes qui miment les produits de dégradation de la paroi des cellules végétales attaquées).

L'ABE-IT 56, principe actif du Belvine (commercialisé par la société Cérience), est extrait de la levure *Saccharomyces cerevisiae.*

**Plantes utilisées** :
- Tabac *(Nicotiana tabacum* cv. Xanthi, graines commercialisées par la société Etsy)
- Arabette des dames (*Arabidopsis thaliana,* graines commercialisées par le NASC, Eurasian Arabidopsis Stock Centre)
- Vigne (*Vitis vinifera* cv. Marsellan, plants commercialisés par les pépinières Velletaz)

De manière plus générale toutes les plantes exprimant les histones désacétylases de type-2, c'est-à-dire les monocotylédones et les dicotylédones.

**Microorganismes testés** :
- *Plasmopara viticola* (oomycète responsable du mildiou de la vigne)
- *Erysiphe necator* (champignon responsable de l'oïdium de la vigne)
- *Hyaloperonospora parasitica NOCO2* (champignon responsable du mildiou *d'Arabidopsis thaliana*)

### Préparation des solutions désinhibitrices :

Le butyrate de sodium et ses dérivés à savoir l'hydroxybutyrate, l'éthylbutyrate et le méthylbutyrate correspondent aux produits disponibles dans le commerce commercialisés par la société Sigma Aldrich.

Le butyrate de sodium (Ref. 303410, Sigma Aldrich) est une poudre à dissoudre dans de l'eau. Une solution de butyrate de sodium a été préparée par dissolution de poudre à dissoudre dans de l'eau ultrapure avec une résistance ohmique supérieure à 18,2 MΩ à température ambiante (25°C). La gamme de concentrations testées allait de 0,11 à 1,1 g par litre (soit une concentration de 1 à 10 mM). Alternativement la solution a été préparée par dilution d'une solution concentrée 100 fois. La limite de solubilité du butyrate de sodium est de l'ordre de 100 g par litre.

L'hydroxybutyrate de sodium (Ref. 54965, Sigma Aldrich) a été préparé selon le procédé décrit pour le butyrate avec les mêmes concentrations. En particulier, une solution d'hydroxybutyrate de sodium (Ref. 54965) a été préparée par dissolution de poudre à dissoudre dans de l'eau ultrapure avec une résistance ohmique supérieure à 18,2 MΩ à température ambiante (25°C). La gamme de concentrations testées allait de 0,126 à 1,26 g par litre (soit une concentration de 1 à 10 mM). Alternativement la solution a été être préparée par dilution d'une solution concentrée 100 fois. La limite de solubilité du butyrate est de l'ordre de 100 g par litre.

L'éthyl (Ref. E15701) et le méthyl (Ref. 277452) butyrate sont commercialisés par la société Sigma Aldrich sous forme liquide à des concentrations variables selon le fabriquant. Des solutions comprenant une concentration allant de 0,116 à 1,16 g par litre et 0,102 à 1,02 g par litre, respectivement (soit une concentration de 1 à 10 mM) ont été préparées par dilution dans l'eau ultrapure avec une résistance ohmique supérieure à 18,2 MΩ à température ambiante (25°C). Ces deux composés sont aussi disponibles sous forme de poudre à dissoudre dans l'eau.

Les solutions stockées à température ambiante (25°C) sont à utiliser dans les 12 h suivant leur préparation. Les solutions concentrées peuvent être conservées plusieurs semaines à température ambiante (25°C).

Les solutions ont été préparées à l'aide d'un agitateur à barreau aimanté avec les équipements de protection individuelle adaptées à savoir blouse en coton, gants en latex et lunettes de protection. Le butyrate dégage une forte odeur de beurre rance ; l'hydroxybutyrate n'a pas d'odeur particulière ; les esters de butyrate, méthyl et éthyl, ont respectivement une odeur de pomme et d'ananas.

Les deux composés stimulateurs de défense des plantes (SDP) qui ont été utilisés étaient le COS-OGA (principe actif du Messager) et l'ABE-IT 56 (principe actif du Belvine) correspondant aux produits disponibles dans le commerce et commercialisés par la société Cérience.

### Conditions de culture des boutures de vigne en conditions contrôlées (serre) :

L'ensemble des essais a été réalisés en serre sur des boutures herbacées du cépage Marselan (*Vitis vinifera* cv. Marselan ; cloné agrée 980).

Les boutures ont été cultivées sur un mélange tourbe / perlite (70/30 m/m). La tourbe utilisée était la tourbe Hansatorf (pH 4,3) commercialisée par la société Floragard et la perlite était la Perligran Premium (diamètre 1-5 mm) commercialisée par la société Knauff.

Dans un premier temps des boutures herbacées à un oeil ont été réalisées à partir de pieds mère cultivés en serre dans les mêmes conditions que les boutures utilisées dans les essais.

Les boutures ont été cultivées pendant 4 semaines en mini-serres (40x60 cm ; fermées pendant deux semaines puis progressivement ouvertes en deux semaines) dans des mottes de tourbes / perlite. Les mini-mottes Fertiss 2x4cm (commercialisées par la société Fertil) ont été arrosées à l'eau les 3 premières semaines, puis à la solution nutritive (TOPFERT 2 10-10-10 - commercialisée par la société Plantin - à 2 ml.L⁻¹ d'eau osmoée additionnée de 1,5 mL.L⁻¹ de MagPlant « S » - commercialisé par la société Plantin - de 0,101 mL.L⁻¹ d'une solution mère de NaCL - commercialisé par la société VWR - à 116 g.L⁻¹ et de 0,6 mL.L⁻¹ d'une solution mère de CaNO₃-4H₂O - commercialisée par la société VWR - à 472 g.L⁻¹ (le tout dans de l'eau osmosée) et suivant une photopériode 16 h jour (23-25°C) / 8 h nuit (15-19°C).

Après 4 semaines, les boutures ont été rempotées dans un mélange tourbe-perlite dans des godets (8×8×8 cm) et cultivées pendant 4 semaines avec une photopériode 16h jour (23-25°C) / 8h nuit (15-19°C)

La Figure 1 illustre la morphologie typique d'une bouture de *Vitis vinifera* cépage Marselan utilisée lors des essais. Seules les feuilles des rangs 1 et 2 ont été utilisées.

### Préparation des inoculums

*Plasmopara viticola* est l'oomycète agent pathogène du mildiou de la vigne et correspond à la souche décrite dans Jacquens et al. 2022 [11]. *P*. *viticola* a été cultivé par repiquage hebdomadaire sur des boutures de Marselan à partir de feuilles infectées mises à sporulées en conditions humides (humidité relative supérieure à 95 %), à l'obscurité pendant 24 h. Les sporangiophores ont été récupérés par lavage de la face inférieure des feuilles à l'eau ultrapure (Résistivité supérieure à 18,2 MΩ). Après libération spontanée dans l'eau, et quantification des zoospores à la cellule de Malassez, l'inoculation de nouvelles plantes a été faite par vaporisation (Flacon pulvérisateur atomiseur - 20 mL, Dutscher ref. 670884) d'une solution de 10⁴ zoospores par mL d'eau ultrapure sur la face inférieure.

*Erysiphe necator* est le champignon agent pathogène de l'oïdium de la vigne et la souche correspond à celle décrite par Brulé et al. 2019 [5]. E. *necator* a été cultivé par repiquage successif : les ascopores issues des cléistothèces d'une feuille contaminée, par exemple depuis 20 jours, ont été récupérées par lavage de la feuille contaminée dans de l'eau osmosée. La concentration d'ascospores a été déterminée par comptage dans une cellule de Malassez et ajustée à une concentration de 10⁵ ascospores/mL. Les feuilles de rang 1, 2 et 3 (Figure 1) ont été inoculées par vaporisation (Flacon pulvérisateur atomiseur - 20 mL, commercialisé par la société Dutscher sous la référence commerciale ref. 670884) et les plantes ont été cultivées en serre dans les conditions suivantes : 25°C le jour / 18°C la nuit avec une photopériode de 18 h.

### Quantification des contaminations et mesure

Mildiou : après 5 jours d'incubation en serre (photopériode 16 h jour (23-25°C) / 8h nuit (15-19°C) ; pas de contrôle de l'humidité relative), 6 disques foliaires (diamètre : 10-12 mm) ont été réalisés à l'aide de perce-bouchons (Dutscher Ref 810655) sur chaque feuille inoculée et placés à la lumière et avec une hygrométrie supérieure à 95 %. Des photographies de l'ensemble des disques d'une même expérimentation ont été réalisées dans des conditions de prise de vue identiques (focale, ouverture, durée d'exposition). Les photographies obtenues ont ensuite été analysées à l'aide du logiciel Visilog permettant de déterminer le pourcentage d'infection de chaque disque, c'est-à-dire de mesurer précisément la surface de chaque disque présentant une sporulation blanche de *P. viticola.* Un ratio surface sporulante / surface totale du disque a alors été calculé et a ainsi permis de déterminer pour chaque disque le niveau d'infection. La normalisation des données par rapport au témoin non traité a permis de calculer le pourcentage de protection induit par le traitement. Les résultats donnés correspondent à la moyenne obtenue à partir de 4 à 6 plantes par conditions, soit à raison de 12 disques par plantes une moyenne de 48 à 72 disques foliaires.

La quantification du pourcentage de sporulation du disque peut également se faire en utilisant le logiciel gratuit ImageJ. Les photographies d'une même expérimentation ont été réalisées dans des conditions de prise de vue identiques (éclairage, sensibilité, ouverture, durée d'exposition afin de comparer les quantifications d'une boite à l'autre selon le protocole suivant :
1. Sous ImageJ, ouvrir le fichier image ou importer une image
2. Eventuellement recadrer l'image :
3. Convertir l'image en format 8-bit
4. « Seuiler » l'image. Tous les pixels en dessous du seuil sont affectés de la valeur 0 (noir), tous les pixels au-dessus du seuil sont affectés de la valeur 255 (blanc). Ajuster la valeur manuellement en comparant l'image « seuilée » à l'original ; seules les sporulations doivent se différencier du fond du disque foliaire.
5. Fixer les paramètres de mesure :
   - Aire ("Area")
   - Valeur de gris Minimum et Maximum (« Min & Max gray value »)
   - moyenne de valeur de gris (« Mean gray value »)
   - Area fraction
6. Eliminer si besoin les zones seuillées correspondant aux nervures.
7. Sélectionner une région d'intérêt ROI (« Région of Interest ») ronde (les données de surface de la zone s'affichent sous le bandeau) correspondant à la surface d'un disque. Superposer exactement la ROI au disque.
8. Quantifier le signal : détermination des paramètres mentionnés / sélectionnées au point 5. Les valeurs Moyenne (« Mean ») et pourcentage d'aire (« %Area ») pourront être utilisées pour le calcul de la protection.
9. Déplacer la zone de ROI sur un nouveau disque. Mesurer de la même façon.
10. Une fois les mesures faites, transférer les données sur une feuille de tableur pour calculer le pourcentage de protection induit par les traitements.

Oïdium : après 20 jours d'incubation (photopériode 16 h jour (23-25°C) / 8 h nuit (15-19°C) ; pas de contrôle de l'humidité relative), les feuilles préalablement inoculées ont été prélevées et classées en 4 catégories notées de 0 à 3 selon l'intensité des symptômes observées (0 traduisant une absence totale de maladie, 1 correspondant à une surface totale contaminée de 10 %, 2 correspondant à une surface totale contaminée de 25 % et 3 à une surface totale contaminée supérieure à 50 %).

### Protocole expérimental

- Approches de prétraitement (Figure 2 (1/2))
   La figure 2 (1/2) a été obtenue par une approche dite de prétraitement. C'est-à-dire que la molécule désinhibitrice, à savoir l'acide butyrique ou un dérivé d'acide butyrique, ou de l'un de leurs sels a été appliquée par vaporisation à une concentration comprise ente 1 et 10 mM à l'aide d'un flacon vaporisateur avec atomiseur de façon à obtenir une densité de gouttelettes comprise entre 20 et 50 gouttelettes par cm², et ceci X heures avant le SDP, X pouvant varier de 2 à 48 h. La référence J0 correspond à l'infection des plantes par *P. viticola* ou *E*. *necator.* Les symptômes de la maladie ont été mesurés à J+6 à savoir 6 jours après infection pour le mildiou ou J+20, à savoir 20 jours après infection pour l'oïdium.
- Approche de cotraitement (Figure 2 (2/2))
   La figure 2 (2/2) a été obtenue lorsque la molécule désinhibitrice et le SDP ont été appliqués simultanément par pulvérisation à l'aide d'un flacon vaporisateur avec atomiseur, c'est-à-dire qu'une même solution comprenant l'acide butyrique ou un dérivé d'acide butyrique, ou de l'un de leurs sels a été appliquée par vaporisation à une concentration comprise entre 1 et 10 mM d'une part, et d'autre part l'un des deux SDP (Messager ou Belvine) à des concentrations respectivement de 12,5 mg.L⁻¹ et 3,25 g.L⁻¹, et ceci 2 jours avant l'infection des plantes.

En particulier, les deux premières feuilles complètement étalées de la zone apicale d'une bouture herbacée ont été traitées par pulvérisation (densité de gouttelettes de solution comprise entre 20 et 50 gouttelettes par cm²) sur les deux faces pour les essais de protection contre le mildiou. Pour les essais de protection contre l'oïdium, ce sont les trois premières feuilles étalées qui ont été pulvérisées par :
- une solution A comprenant l'acide butyrique ou un dérivé d'acide butyrique, ou de l'un de leurs sels a été appliquée par vaporisation à une concentration comprise entre 1 et 10 mM d'une part, et d'autre part l'un des deux SDP (Messager ou Belvine) à des concentrations respectivement de 12,5 mg.L⁻¹ et 3,25 g.L⁻¹, et ceci 2 jours avant l'infection des plantes
- une solution B comprenant la molécule désinhibitrice, à savoir l'acide butyrique ou un dérivé d'acide butyrique, ou de l'un de leurs sels appliquée par vaporisation à une concentration comprise entre 1 et 10 mM à l'aide d'un flacon vaporisateur avec atomiseur de façon à obtenir une densité de gouttelettes comprise entre 20 et 50 gouttelettes par cm², et ceci X heures avant le SDP, X pouvant varier de 2 à 48 h. La référence J0 correspond à l'infection des plantes par *P. viticola* ou *E*. *necator* en d'autres termes au temps de l'infection. Les symptômes de la maladie ont été mesurés à J+6, à savoir 6 jours ou 144h après infection pour le mildiou ou à J+20, à savoir 20 jours ou 480 heures après infection pour l'oïdium.

Un flacon vaporisateur avec atomiseur 20 mL de la marque Dutscher (Ref 670884) a été utilisé de sorte à déposer un tapis homogène de gouttelettes sur chaque face de la feuille.

Pour l'inoculation par *P. viticola,* une solution de zoospores a été pulvérisée sur la seule face inférieure à la concentration de 10⁴ zoospores par mL (les zoospores ont été préalablement mises en suspension dans de l'eau déminéralisée). Les plantes ont immédiatement été placées à température ambiante (25°C) à l'obscurité dans une atmosphère dont l'hygrométrie était supérieure à 95 % afin d'augmenter l'efficacité de l'infection. Après 3 h à l'obscurité les plantes ont été replacées en serre pour une durée de 5 jours. Au 5^{ème} jour, 6 disques foliaires de 10 à 12 mm ont été réalisés par feuille inoculée à l'aide d'un perce bouchon (Dutscher, ref. 810655) et déposés dans des boites en plastiques (Multriroir, BoiteLab Ref 45106BOILAB06) sur un papier Whatman imbibé d'eau, la face supérieure de la feuille au contact du papier, la face inférieure dirigée vers le dessus. Les boites correspondant à l'ensemble des modalités ont été placées simultanément dans une enceinte pendant 24 h à la lumière et à 25°C afin de permettre la sporulation de *P. viticola.* Le lendemain l'intensité des symptômes a été mesurée en utilisant Visilog comme décrit précédemment.

Pour l'infection par *E. Necator,* les deux faces des trois premières feuilles complètement étalées de la zone apicale d'une bouture herbacée ont été traitées par pulvérisation sur la face supérieure à l'aide d'un flacon vaporisateur avec atomiseur (20 mL) de la marque Dutscher (Ref 670884), de sorte à déposer un tapis homogène de gouttelettes sur chaque face de la feuille. Après 3 h de ressuyage (durée permettant un séchage des gouttelettes de solution à la surface des feuilles) à la paillasse les plantes ont été transférées en serre pour une durée de 20 jours. Au 20^{ème} jour, le limbe des trois feuilles inoculées a été prélevé et l'intensité des symptômes a été appréciée visuellement comme décrit précédemment.

### Résultats :

### 1. Effet du butyrate de sodium et/ou d'un stimulateur de défense de plantes vis-à-vis d'une infection

Le SDP était le COS-OGA commercialisé par la société Cérience sous la référence commerciale Messager.

La figure 3 représente un histogramme comprenant les résultats obtenus et présentant l'efficacité de la protection induite contre *P. viticola* (en %), agent du mildiou de la vigne, en fonction des traitements réalisés. 6 traitements différents ont été réalisés :
- Contrôle (traitement avec de l'eau)
- But (traitement avec 1 mM de butyrate de sodium seul au jour J0)
- COS-OGA 12,5 (traitement avec une demi-dose de COS-OGA à 12,5 mg.L⁻¹. La dose homologuée pour les traitements au champ est de 25 mg.L⁻¹)
- Pretrait. But / COS-OGA (prétraitement pendant 48 h avec 1 mM de butyrate de sodium puis traitement avec une demi-dose de COS-OGA 12,5 mg.L⁻¹)
- Cotrait. But / COS-OGA (traitement simultané avec 1 mM de butyrate de sodium et une demi-dose de COS-OGA 12,5 mg.L⁻¹. Les deux molécules sont dissoutes dans la même solution)
- COS-OGA 25 (traitement avec une pleine dose de COS-OGA à 25 mg.L⁻¹)

Le procédé appliqué pour chacun des traitements est tel que décrit ci-dessus.

Sur la figure 3, les valeurs présentées correspondent à la moyenne de trois expériences indépendantes et sont exprimées en pourcentage de protection induite, 100 % de protection induite correspondant à une absence totale de développement de *P. viticola.*

Les résultats obtenus sur la figure 3 démontrent clairement que la seule désinhibition des réponses immunitaires de la plante ne suffit pas à induire une protection significative contre *P. viticola,* de même qu'une demi-dose de COS-OGA (12,5 mg.L⁻¹).

Tel que représenté sur la figure 3, de manière surprenante et inattendue, lorsque le butyrate de sodium est associé à une demi-dose de COS-OGA c'est-à-dire une concentration de 12,5 mg.L⁻¹ la protection induite est au moins similaire à celle obtenue avec une pleine dose de COS-OGA (25 mg.L⁻¹) dans le cas d'un cotraitement, voire à une augmentation significative lorsque le butyrate de sodium est appliqué 48 h avant la pleine dose de COS-OGA.

En d'autres termes, les résultats obtenus démontrent clairement que la combinaison du butyrate de sodium et d'un composé SDP permet avantageusement et de manière surprenante d'obtenir une protection significative d'une plante vis-à-vis d'un agent pathogène tout en réduisant de moitié la quantité/concentration du composé stimulateur de défense des plantes.

Les mêmes essais ont été réalisés pour déterminer l'induction d'une protection contre *E. Necator,* champignon responsable de l'oïdium de la vigne (tests réalisés sur des boutures herbacées de *Vitis vinifera* cépage Marselan).

Les résultats obtenus sont représentés sur la Figure 4. La figure 4 représente un histogramme présentant l'efficacité de la protection induite contre *E. Necator* (en %), agent de l'oïdium de la vigne, en fonction des traitements réalisés. 6 traitements différents ont été testés selon le procédé décrit ci-dessus (de gauche à droite) :
- Ctle (Contrôle, traitement avec de l'eau)
- COS-OGA 12,5 (traitement avec une demi-dose de COS-OGA à 12,5 mg.L⁻¹. La dose homologuée pour les traitements au champ est de 25 mg.L⁻¹)
- But (traitement avec 1 mM de butyrate de sodium seul au jour J0)
- Prétrait. But / COS-OGA (prétraitement pendant 48 h avec 1 mM de butyrate de sodium puis traitement avec une dose de COS-OGA 12,5 mg.L⁻¹)
- ABE-IT 56 (traitement avec 3,25 g.L⁻¹ de ABET-IT 56, principe actif du Belvine)
- Prétrait. But / ABE-IT 56 (prétraitement pendant 48 h avec 1 mM de butyrate de sodium puis avec une dose de 3,25 g.L⁻¹ de ABET-IT 56, principe actif du Belvine)

Les résultats obtenus sur la figure 4 démontrent clairement que le butyrate de sodium seul utilisé à la dose de 1 mM induit une protection significative contre *E. necator,* similaire à celle induite par l'ABE-IT 56 (principe actif du Belvine), alors que le COS-OGA (principe actif du Messager) n'induit pas, utilisé à demi-dose, une protection significative. Un prétraitement pendant 48 h au butyrate de sodium préalablement à l'application d'une dose de COS-OGA de 12,5 mg.L⁻¹ou d'une dose d'ABE-IT 56 de 3,25 g.L⁻¹ augmente de manière significative la protection induite par les deux SDP utilisés seuls.

Tel que représenté sur la figure 4, de manière surprenante et inattendue, lorsque le butyrate de sodium est associé à une demi-dose de COS-OGA c'est-à-dire une concentration de 12,5 mg.L⁻¹ ou à une dose de 3,25 g.L⁻¹ d'ABE-IT 56, la protection induite est supérieure à celle induite par les deux SDP appliqués seuls.

Dans ce pathosystème, la conclusion générale est la même que celle établie ci-dessus pour la protection contre *P. viticola,* à l'exception qu'ici le traitement au butyrate de sodium seul est capable d'induire une protection significative contre l'agent de l'oïdium de la vigne.

En d'autres termes, les résultats obtenus démontrent clairement que la combinaison du butyrate de sodium et d'un composé SDP permet avantageusement et de manière surprenante d'obtenir une protection significative d'une plante vis-à-vis d'un agent pathogène et permet avantageusement de réduire de moitié la quantité/concentration du composé stimulateur de défense des plantes.

### 2. Effet du butyrate de sodium, méthyl- butyrate, de l'éthyl-butyrate de sodium et/ou d'un stimulateur de défense de plantes vis-à-vis d'une infection

Le SDP était l'ABE-IT 56 commercialisé par la société Cérience sous la référence commerciale Belvine.

La figure 5 présente les résultats obtenus avec le butyrate de sodium et des dérivés du butyrate de sodium, à savoir le méthyl- et l'éthyl-butyrate. La figure 5 présente un histogramme présentant la protection induite contre *E. necator,* agent de l'oïdium de la vigne, suite au traitement de la plante par l'ABE-IT 56 (principe actif du Belvine) et au traitement par le butyrate de sodium et le méthyl-butyrate et/ou l'éthyl-butyrate. Ces valeurs sont représentatives de deux expériences indépendantes.

Les résultats obtenus avec des esters du butyrate, à savoir le méthyl-butyrate et l'éthyl-butyrate. 6 traitements ont été appliqués (de gauche à droite) :
- Contrôle (traitement avec de l'eau)
- But (traitement avec 1 mM de butyrate de sodium seul au jour J0)
- ABE-IT 56 (traitement avec une dose de 3,25 g.L⁻¹ d'ABE-IT 56, principe actif du Belvine)
- Pretrait. But / ABE-IT 56 (prétraitement pendant 48 h avec 1 mM de butyrate de sodium puis avec une dose de 3,25 g.L⁻¹ d'ABE-IT 56)
- Pretrait. MeBut / ABE-IT 56 (prétraitement pendant 48 h avec 1 mM de méthyl-butyrate puis avec une dose de 3,25 g.L⁻¹ d'ABE-IT 56)
- Pretrait. EtBut / ABE-IT 56 (prétraitement pendant 48 h avec 1 mM d'éthyl-butyrate puis avec une dose de 3,25 g.L⁻¹ d'ABE-IT 56)

Les valeurs présentées correspondent à la moyenne de deux expériences indépendantes et ont été exprimées en pourcentage de protection induite, 100 % de protection induite correspondant à une absence totale de développement d'*E. necator,* agent de l'oïdium de la vigne.

Les résultats obtenus sur la figure 5 démontrent clairement que la combinaison du butyrate de sodium et des dérivés du butyrate, à savoir le méthyl- et l'éthyl-butyrate avec un composé SDP, à savoir l'ABE-IT 56 permet, de manière surprenante et inattendue une augmentation significative de l'efficacité de protection induite par l'ABE-IT 56 utilisé seul. En outre, les résultats obtenus sur la figure 5 démontrent clairement que la combinaison du butyrate de sodium et des dérivés du butyrate, à savoir le méthyl- et l'éthyl-butyrate avec un composé SDP, à savoir le ABE-IT 56 permet, de manière surprenante et inattendue un effet synergique concernant l'efficacité de protection.

Les résultats indiquent que le prétraitement au butyrate de sodium ou avec l'un ou l'autre de ces deux esters (méthyl- et éthyl-buryrate) permet d'augmenter significativement la protection induite par l'ABE-IT 56.

### 3. Effet du butyrate de sodium et/ou d'un stimulateur de défense de plantes vis-à-vis d'une infection d'Arabidopsis thaliana par Hyaloperonospora aradibopsidis NOCO2

L'étude de la désinhibition de la réponse immunitaire de plante par le butyrate de sodium et/ou d'un composé stimulateur de la défense de plante a été réalisée sur la plante modèle *Arabidopsis thaliana* ecotype Col0 (aucune application agronomique sur cette plante) suite à une infection par *Hyaloperonospora aradibopsidis NOCO2* (agent du mildiou). La souche utilisée correspond à la souche décrite dans Manzoor et al. 2013 [12].

Des graines *d'Arabidopsis thaliana* ecotype Columbia (Col 0) ont été semées sur des pastilles (100 graines par pastille) de tourbe (Jiffy-7 33 mm pellet-pack, commercialisées par la société Jiffy Products International AS) et placées en chambre de culture (10 h jour à 20°C et 14 h nuit à 18°C). Après 12 jours de culture, 500 µL d'une solution de spores de *H. arabidospidis* NOCO2 (à la concentration de 5.10⁴ spores/mL) ont été vaporisés sur les plantes à l'aide d'un flacon vaporisateur avec atomiseur de 20 mL. Les plantes inoculées ont été placées en mini-serre hermétique (fournisseur : Naturegardening), hygrométrie supérieure à 95 %, 10 h jour à 20°C et 14 h nuit à 18°C pendant 7 jours. Les parties aériennes de trois pastilles de tourbe ayant reçu le même traitement et étant inoculées de la même manière ont été coupées, regroupées et pesées. Les oospores présentes sur les feuilles ont été récupérées par lavage dans un volume de 10 mL d'eau ultrapure (résistivité supérieure à 18 mΩ). La quantité d'oospores récupérée a été déterminée par comptage en cellule de Malassez et les valeurs ont été normalisées par gramme de matière fraiche de feuille.

Les résultats obtenus ont été représentés sur la Figure 6. La figure 6 représente un histogramme présentant la protection induite contre *H. aradibopsidis NOCO2,* agent du mildiou *d'Arabidopsis thaliana* suite au traitement de la plante par l'ABE-IT 56 (principe actif du Belvine) ou avec le COS-OGA (principe actif du Messager) et un traitement avec le butyrate de sodium. Ces valeurs sont représentatives de deux expériences indépendantes. Les modalités de traitement ont été (de gauche à droite) :
- Ctle (traitement avec de l'eau)
- COS-OGA 12,5 (traitement avec une demi-dose de 12,5 mg.L⁻¹ de COS-OGA)
- But (traitement avec 1 mM de butyrate de sodium seul au jour J-2)
- Pretrait. But / COS-OGA (prétraitement pendant 48 h avec 1 mM de butyrate de sodium puis avec une demi-dose de 12,5 mg.L⁻¹ de COS-OGA)
- ABE-IT 56 (traitement avec une dose de 3,25 g.L⁻¹ d'ABE-IT 56, principe actif du Belvine)
- Pretrait. But / ABE-IT 56 (prétraitement pendant 48 h avec 1 mM de butyrate de sodium puis avec une dose de 3,25 g.L⁻¹ d'ABE-IT 56)

Les valeurs présentées correspondent à la moyenne de deux expériences indépendantes et ont été exprimées en pourcentage de protection induite, 100 % de protection induite correspondant à une absence totale de développement de *H. arabidopsidos NOCO2.*

Les résultats obtenus sur la figure 6 démontrent clairement que le butyrate de sodium permet avantageusement d'induire une efficacité de protection identique à celle induite par le COS-OGA. Les résultats obtenus démontrent également clairement, de manière surprenante et inattendue que la combinaison du butyrate de sodium et du COS-OGA a un effet synergique concernant la protection de la plante. Les résultats obtenus démontrent également clairement, de manière surprenante et inattendue que la combinaison du butyrate de sodium et de d'ABE-IT 56 a un effet synergique concernant la protection de la plante.

Les résultats obtenus démontrent donc clairement que l'acide butyrique ou d'un dérivé d'acide butyrique, ou de l'un de leurs sels permet avantageusement une protection des plantes vis-à-vis d'infections.

Les résultats obtenus démontrent donc clairement que la combinaison de l'acide butyrique ou d'un dérivé d'acide butyrique, ou de l'un de leurs sels et d'un composé stimulateur de défense de plante permet avantageusement l'obtention d'un effet synergique pour la protection des plantes vis-à-vis d'infections.

Les résultats obtenus démontrent en outre clairement que l'acide butyrique ou d'un dérivé d'acide butyrique, ou de l'un de leurs sels permet avantageusement une stimulation et/ou désinhibition des réponses immunitaires de plantes.

Les résultats obtenus démontrent donc clairement que la combinaison de l'acide butyrique ou d'un dérivé d'acide butyrique, ou de l'un de leurs sels et d'un composé stimulateur de défense de plante permet avantageusement une stimulation et/ou désinhibition synergique des réponses immunitaires de plantes.

### 4. Etude in-vitro d'un traitement de culture cellulaire par le butyrate et/ou d'un stimulateur de défense de plantes

Des cultures cellulaires de vigne (*V. vinifera* cépage Marselan) ont été utilisées pour déterminer si, à l'échelle de la signalisation cellulaire conduisant au développement de la mise en place de la réponse immunitaire, l'effet synergique suite à un traitement avec du butyrate de sodium et/ou un SDP, le COS-OGA dans le cas présent, conduisait à des réponses de défense plus intense et / ou plus précoces.

Deux réponses cellulaires associées à la mise en place des réponses immunitaires ont été étudiées : l'activation de certains gènes de défense, à savoir les gènes STS (pour Stilbene synthase, Référence NCBI : XM_003634017.4), PAL (pour Phenylalanine amonia lyase, Référence NCBI : XM_002281763.5) et PR-3 (pour Pathogenesis-related 3, Référence NCBI : NM_001281244.1) et l'activation d'une famille de protéines particulières, les MAPK (pour Mitogen-Activated Protein Kinase). Les cellules de vignes (*Vitis vinifera* cépage Marsellan) ont été traitées dans leur milieu de culture (milieu Nitsch-Nitsch - commercialisé par la société Duchefa sous la référence Ref. N0224.0025) additionné de 58 mM de saccharose - commercialisé par la société SigmaAldrich sous la référence Ref. S0389), sous agitation (125 rotations par minute) et à 25°C. Pour l'étude de l'activation des gènes de défense, les ARNm des cellules de vigne ont été extraits à l'aide du protocole suivant. Après avoir été broyés dans de l'azote liquide (-196°C) à l'aide d'un mortier / pilon, les échantillons ont été traités au TrizolTM (Gibco BRL) à raison de 1 mL pour 100 mg de tissu broyé dans un tube Eppendorf 1,5 mL (Dutcher, Ref. 133511). Après ajout de 200 µL de chloroforme (Supelco, Ref. 102445), les tubes ont été agités fortement et laissés à température ambiante (25°C) pendant 10 minutes. Les échantillons ont été ensuite centrifugés à 12,000×g à 4°C pendant 15 min en utilisant une centrifugeuse de paillasse (Eppendorf). La phase aqueuse a été récoltée à la pipette et transférée dans un nouveau tube Eppendorf de 1,5 mL ; les ARN totaux ont été alors précipités par addition de 500 µL d'isopropanol (Supelco Ref. 109634) et le tout a été laissé à incuber 10 min à température ambiante (25°C). Après une centrifugation à 12,000×g à 4°C pendant 10 min et élimination du surnageant à la pipette, les culots d'ARN ont été lavés avec 1 mL d'éthanol (Sigma-Aldrich Ref. 8.18760) 70 % (v/v dans de l'eau traitée au diéthyl pyrocarbonate - DEPC - ; Sigma-Aldrich Ref. 3660). Après une dernière centrifugation à 12,000×g à 4°C pendant 5 min et élimination du surnageant à la pipette, les culots d'ARN totaux ont été enfin repris dans 30 µL d'eau traitée au DEPC. La concentration et la pureté des ARN totaux ont été évaluées par spectrophotométrie à 260 nm (Nanodrop).

Les ARNm ont été rétro-transcrits grâce à une amorce constituée de 15 thymines (oligo-dT, Eurofins) qui s'hybride à l'extrémité polyA des ARNm. Pour cela, 1 µg d'ARN totaux a été dilué dans 4 µL d'eau traitée au DEPC et le mélange réactionnel contenait (selon les recommandations du fournisseur, Superscript IV de Thermofischer Scientific) du tampon de réaction concentré 1X contenant les dNTP nécessaires à la rétrotranscription, 10 mM de MgCl₂, 100 ng d'oligo-dT et 2 µL d'un mélange réactionnel contenant la transcriptase inverse Superscript IV et des inhibiteurs de RNAse). L'ensemble des solutions étaient fournies dans le kit Superscript IV de Thermofischer Scientific. Les échantillons ainsi préparés ont été incubés dans un thermocycleur Biorad selon le programme suivant : 10 min à 25°C, 1 h à 37°C, 5 min à 85°C. Puis, les ADNc synthétisés ont été stockés à -20°C.

La PCR quantitative a été réalisée à l'aide du kit GoTaq^{®} qPCR Master Mix (Promega) avec 2 µL d'ADNc dilué au 1/20 dans de l'eau traitée au DEPC et 250 nM d'amorces spécifiques des différents gènes testés (voir tableau 1 ci-dessous) et deux gènes de références (VATP16 - pour V-type proton ATPase 16 - et EF1α - pour Elongation Factor 1α). Les réactions de PCR ont été réalisées dans les plaques de 384 puits (Nunc, Z723010) dans les conditions suivantes : 95°C pendant 2 minutes ; 40 cycles de 3 étapes, 95°C pendant 15 secondes (dénaturation), 60°C pendant 30 secondes (hybridation des amorces), 72°C pendant 30 secondes avec l'appareil thermocycleur ViiA^{™} 7 commercialisé par la société Applied Biosystems. Une dernière étape dans le programme a permis de vérifier la spécificité des amplicons par une analyse des courbes de fusion. La quantification des transcrits a été déterminée par la méthode comparative 2^{-ΔΔCt} (Pfaffl, 2001) [13].
Les amorces spécifiques des gènes étudiés étaient les suivantes :

**Tableau 1 :**

| | Amorce sens | Amorce antisens |
|---|---|---|
| STS | AGGAAGCAGCATTGAAGGCTC (SEQ ID NO 1) | TGCACCAGGCATTTCTACACC (SEQ ID NO 2) |
| PAL | AGTCTCCATGGACAACACCCG (SEQ ID N0 3) | TGCTCAGCACTTTCGACATGG (SEQ ID N0 4) |
| PR3 | GCAACCGATGTTGACATATCA (SEQ ID N0 5) | CGTCGCCCTAGCAAGTGAG (SEQ ID N0 6) |
| VATP16 | CTTCTCCTGTATGGGAGCTG (SEQ ID N0 7) | CCATAACAACTGGTACAATCGAC (SEQ ID N0 8) |
| EF1-alpha | TCTGCCTTCTTCCTTGGGTA (SEQ ID N0 9) | GCACTTCGATCAAAAGAGGA (SEQ ID NO 10) |

En particulier, une étude de l'activation éventuelle de gènes de défense a été effectuée. Il s'agissait des trois suivants : le gène STS (pour Stilbène Synthase ; Figure 7), le gène PAL (pour Phénylalanine Ammonia Lyase : Figure 8) et le gène PR-3 (pour Pathogenesis Related-3 ; Figure 9). Ces deux gènes codent des protéines impliquées dans la synthèse de molécules appelées phytoalexines, des composés à activité antimicrobienne, et dans les renforcements de la paroi cellulaire. Les résultats obtenus sont respectivement représentés sur les figures 7, 8 et 9. Sur ces figures, les valeurs données correspondent au facteur d'accumulation de l'ARNm correspondant à ces gènes mesurés par RT-PCR quantitative. En particulier, la figure 7 représente un diagramme en bâton présentant l'accumulation de l'ARNm du gène STS codant la stilbène synthase dans des cellules de vigne dans leur milieu de culture sans traitement (hachures verticales grises et blanches 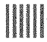 ), suite à un traitement par 1 mM de butyrate de sodium (remplissage gris moyen 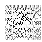 ) (le milieu comprenant à 1 mM de butyrate de sodium), à 6,25 mg.L⁻¹ de COS-OGA (hachures diagonales grises et blanches 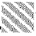 ) (le milieu comprenant 6,25 mg.L⁻¹ de COS-OGA), à un cotraitement avec 1 mM de butyrate et 6,25 mg.L⁻¹ de COS-OGA (remplissage gris à pois blancs 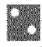 ) (le milieu comprenant 1 mM de butyrate de sodium et 6,25 mg.L⁻¹ de COS-OGA), en fonction du temps en heures. La figure 8 représente un digramme en bâton présentant l'accumulation de l'ARNm du gène PAL codant la Phénylalanine Ammonia Lyase dans des cellules de vigne dans un milieu de culture sans traitement (hachures verticales grises et blanches 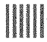 ), suite à un traitement par 1 mM de butyrate de sodium (remplissage gris moyen 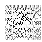 ) (le milieu comprenant à 1 mM de butyrate de sodium), à 6,25 mg.L⁻¹ de COS-OGA (hachures diagonales grises et blanches 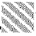 ) (le milieu comprenant 6,25 mg.L⁻¹ de COS-OGA), à un cotraitement avec 1 mM de butyrate et 6,25 mg.L⁻¹ de COS-OGA (remplissage gris à pois blancs 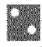 ) (le milieu comprenant 1 mM de butyrate de sodium et 6,25 mg.L⁻¹ de COS-OGA). Tel que démontré sur les figures 7 et 8 l'incubation des cellules de vigne avec du butyrate puis du COS-OGA permet de manière surprenante l'accumulation de l'ARNm correspondant aux gènes STS et PAL de manière synergique et durable dans le temps à savoir pendant au moins 9 heures. Une étude de l'expression du gène PR-3 (Figure 9) codant une chitinase, enzyme impliquée dans la dégradation de la paroi des champignons, a été réalisée. Les résultats obtenus sont représentés sur la figure 9. Sur cette figure, les valeurs données correspondent au facteur d'accumulation de l'ARNm correspondant à ces gènes mesurés par RT-PCR quantitative. La figure 9 représente un digramme en bâton présentant l'accumulation de l'ARNm du gène PR-3 dans des cellules de vigne dans un milieu de culture sans traitement (hachures verticales grises et blanches 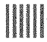 ), suite à un traitement par 1 mM de butyrate de sodium (remplissage gris moyen 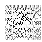 ) (le milieu comprenant à 1 mM de butyrate de sodium), à 6,25 mg.L⁻¹ de COS-OGA (hachures diagonales grises et blanches 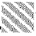 ) (le milieu comprenant 6,25 mg.L⁻¹ de COS-OGA), à un cotraitement avec 1 mM de butyrate et 6,25 mg.L⁻¹ de COS-OGA (remplissage gris à pois blancs 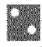 ) (le milieu comprenant 1 mM de butyrate de sodium et 6,25 mg.L⁻¹ de COS-OGA), en fonction du temps en heures.

Tel que démontré sur la figure 9, l'expression du gène PR-3 n'est pas significativement modifié après incubation des cellules de vigne avec du butyrate puis du COS-OGA. En particulier, la combinaison semble avoir un effet négatif sur l'expression en comparaison avec le niveau exprimé après incubation avec le COS-OGA seul. Ces résultats démontrent donc clairement que l'acide butyrique ou d'un dérivé d'acide butyrique, ou de l'un de leurs sels, éventuellement combiné avec au moins un composé stimulateur de défense de plantes, permet avantageusement d'activer, de manière ciblée, des gènes impliqués dans les défenses immunitaires.

Les résultats obtenus démontrent donc clairement que l'acide butyrique ou d'un dérivé d'acide butyrique, ou de l'un de leurs sels permet avantageusement une protection des plantes vis-à-vis d'infections.

Pour l'étude de l'activation d'une famille de protéines kinases connues pour être impliquées dans le développement de la réponse immunitaire des plantes, les MAPK (pour Mitogen-Associated Protein kinases), les protéines totales de cellules de vigne (*Vitis vinifera* cépage Marselan) ont été extraites après broyage au mortier / pilon des cellules congelées dans l'azote liquide (-196°C). Les protéines ont été extraites de cellules de vigne traitées pendant 0, 15, 30, 45 ou 60 min par différents traitements, à savoir des compositions comprenant notamment :
- Contrôle (traitement à l'eau seul)
- But 1 mM (traitement avec 1 mM de butyrate de sodium)
- COS-OGA 12,5 (traitement avec une demi-dose de 12,5 mg.L⁻¹ de COS-OGA, principe actif du Messager)
- But 1 mM + COS-OGA 12,5 (traitement simultané avec 1 mM de butyrate de sodium et une demi-dose de 12,5 mg.L⁻¹ de COS-OGA, principe actif du Messager)
- But 1 mM (-4 h) + COS-OGA 12,5 (traitement avec 1 mM de butyrate de sodium 4 h avant le traitement par une demi-dose de 12,5 mg.L⁻¹ de COS-OGA, principe actif du Messager)
Le traitement consistait à introduire à la pipette dans des Erlenmeyer de 25 mL contenant 10 mL de cellules de vigne (*Vitis vinifera* cépage Marselan) 10 µL de solutions concentrées 1000 fois correspondant aux traitements décrits ci-dessus.
Les protéines ont été séparées par électrophorèse SDS-PAGE selon le protocole décrit par Brulé et al. 2019 [5] : 15 min de migration dans le gel de concentration à 4 % d'acrylamide (BioRad) à 80 V suivies de 75 min de migration dans le gel de séparation à 10 % d'acrylamide (Biorad). Après transfert en conditions liquide sur membrane de Nitrocellulose (Amerhsam) pendant 1 h à 80 V, les MAP kinases ont été révélées à l'aide d'un anticorps dirigé contre les MAP kinases phosphorylées et donc activées (Abcam Ref. ab76299). L'intensité des bandes visibles traduit le niveau d'activation de deux MAP kinases impliquées dans le développement de la réponse immunitaire.
Les résultats présentés dans la figure 10 démontrent clairement qu'un traitement, c'est-à-dire l'incubation des cellules avec une composition comprenant du butyrate de sodium 1 mM, de même qu'un traitement avec une demi-dose de COS-OGA à 12,5 mg.L⁻¹ permet une activation transitoire de deux MAP kinases de masses moléculaires 45 et 47 kDa avec un maximum d'activation après 15 min de traitement/incubation. Les résultats démontrent donc clairement et de manière surprenante que l'utilisation d'acide butyrique ou d'un dérivé d'acide butyrique, ou de l'un de leurs sels permet avantageusement une stimulation et/ou désinhibition d'une réponse immunitaire de plantes.
Les résultats démontrent clairement que le traitement, à savoir l'incubation des cellules, au butyrate de sodium à 1 mM, qu'il précède de 4 h ou non l'incubation des cellules avec une demi-dose de COS-OGA à 12,5 mg.L⁻¹, permet une activation des MAP kinases de manière significative et significativement supérieure à l'utilisation des composés indépendamment. Après 15 min de traitement, l'activation des MAP kinases de 45 et 47 kDa était respectivement plus élevée d'un facteur 1,70 et 1,53 lorsque les cellules de vigne ont été traitées par une composition comprenant du butyrate de sodium 1 mM associée à une demi-dose de COS-OGA à 12,5 mg.L⁻¹, comparée à une solution contenant uniquement une demi-dose de COS-OGA à 12,5 mg.L⁻¹. Ces facteurs d'activation étaient respectivement de 1,10 et 1,34 lorsque la demi-dose de COS-OGA de 12,5 mg.L⁻¹ a été appliquées sur les cellules de vigne 4 h après l'application de 1 mM de butyrate de sodium. En d'autres termes, la combinaison d'acide butyrique ou d'un dérivé d'acide butyrique, ou de l'un de leurs sels et d'au moins un stimulateur de défense des plantes (SDP) permet avantageusement et de manière surprenante d'obtenir un effet synergique et avantageusement de stimuler et/ou désinhiber la réponse immunitaire de plantes.

Les résultats obtenus démontrent donc clairement que la combinaison de l'acide butyrique ou d'un dérivé d'acide butyrique, ou de l'un de leurs sels et d'un composé stimulateur de défense de plante permet avantageusement l'obtention d'un effet synergique pour la protection des plantes vis-à-vis d'infections.

Les résultats obtenus démontrent en outre clairement que l'acide butyrique ou d'un dérivé d'acide butyrique, ou de l'un de leurs sels permet avantageusement une stimulation et/ou désinhibition des réponses immunitaires de plantes.

Les résultats obtenus démontrent donc clairement que la combinaison de l'acide butyrique ou d'un dérivé d'acide butyrique, ou de l'un de leurs sels et d'un composé stimulateur de défense de plante permet avantageusement une stimulation et/ou désinhibition synergique des réponses immunitaires de plantes.

### Références

**1.** Jones and Dangl, 2006 The plant immune system. Nature, 444; 323-329.
**2.** Garcia-Brugger et al. 2006 Early signaling events induced by elicitors of plant defenses. Mol. Plant-Microbe Inter. 19; 711-724
**3.** Héloir et al. 2019, Grapevine recognition of elicitors: from the MAMP/DAMP perception to induced résistance. Front. Plant Sci. 10; 1117
**4.** Krzyzaniak et al. 2018, A Plant Extract Acts Both as a Résistance Inducer and an Oomycide Against Grapevine Downy Mildew. Front Plant Sci. 9;1085.
**5.** Brulé D. et al. 2019. The grapevine (Vitis vinifera) LysM receptor kinases VvLYK1-1 and VvLYK1-2 médiate chitooligosaccharide-triggered immunity. Plant Biotechnol. J. 17; 812-825
**6.** Grandperret et al. 2013. Type-II Histone DeACetylases: elusive plant nuclear signal transducers. Plant Cell Environ., 37; 1259-1269.
**7.** Nicolas-Francès et al. 2018, Evolutionary diversification of type-2 HDAC structure, function and régulation in Nicotiana tabacum. Plant Sci., 269; 66-74.
**8.** Bourque S. et al. 2011. Type-2 histones deacetylases as new regulators of elicitor-induced cell death in plants. New Phytol. 192; 127-139.
**9.** Bourque S. et al. 2016. The évolution of HD2 proteins in green plants. Trends Plant Sci. 21; 1008-1016.-2016
**10**.Schneider et al. 2019. INRA-ResDur: the French grapevine breeding programme for durable résistance to downy and powdery mildew. Acta Hortic. 1248. ISHS 2019, 2017-213.
**11**.Jacquens L et al. 2022.. Biostimulation can prime elicitor induced résistance of grapevine leaves to downy mildew. Front Plant Sci. 2022 Nov 9;13:998273
**12**.Manzoor H et al. 2013. Involvement of the glutamate receptor AtGLR3.3 in plant défense signaling and résistance to Hyaloperonospora arabidopsidis. Plant J, 76: 466-480.
**13**.Pfaffl. 2001. A new mathematical model for relative quantification in real-time RT-PCR. Nucleic Accids Res. 29, 2002-2007.

## Revendications

1. Utilisation d'acide butyrique ou d'un dérivé d'acide butyrique, ou de l'un de leurs sels pour la stimulation et/ou désinhibition d'une réponse immunitaire de plantes.

2. Utilisation selon l'invention la revendications 1 dans laquelle le dérivé d'acide butyrique est choisi parmi un ester d'acide butyrique, de préférence choisi parmi le méthyl et éthyl ester, et un acide hydroxybutyrique, ou l'un de leurs sels.

3. Utilisation selon l'invention la revendications 1 ou 2 dans laquelle le sel est choisi parmi le sel de sodium, de calcium ou de potassium.

4. Utilisations selon l'une quelconque des revendications 1 à 3 comprenant en outre le traitement d'une infection de plante.

5. Utilisation selon l'une quelconque des revendications 1 à 4 dans laquelle l'acide butyrique ou d'un dérivé d'acide butyrique, ou de l'un de leurs sels est compris dans une composition phytosanitaire.

6. Utilisation selon l'invention la revendications 5 dans laquelle la composition phytosanitaire comprend en outre au moins un stimulateur de défense des plantes (SDP).

7. Utilisation selon la revendication 6 dans laquelle ledit au moins un stimulateur de défense des plantes (SDP) est choisi dans le groupe comprenant le COS-OGA (chitooligosaccharide-oligogalacturonide), l'ABE-IT 56.

8. Utilisation selon l'une quelconque des revendications 5 à 7, dans laquelle la concentration d'acide butyrique ou dérivé d'acide butyrique, ou l'un de leurs sels, est comprise de 1 à 10 mM.

9. Utilisation selon l'une quelconque des revendications 5 à 8, dans laquelle la concentration dudit au moins un stimulateur de défense des plantes (SDP) est comprise de 0,05 à 4 g.L⁻¹

10. Procédé de traitement d'une infection de plante comprenant les étapes de :
a) administration d'acide butyrique ou d'un dérivé d'acide butyrique, ou de l'un de leurs sels ou d'une composition phytosanitaire comprenant l'acide butyrique ou d'un dérivé d'acide butyrique, ou de l'un de leurs sels,
b) administration d'au moins un stimulateur de défense des plantes (SDP),
dans lequel l'administration d'acide butyrique ou d'un dérivé d'acide butyrique, ou de l'un de leurs sels est préalable, simultanée ou concomitante à l'administration d'au moins un stimulateur de défense des plantes.

11. Kit phytosanitaire destiné à être utilisé pour la stimulation et/ou désinhibition de la réponse immunitaire de plantes et/ou le traitement d'une infection de plante comprenant :
iii. un acide butyrique ou un dérivé d'acide butyrique, ou l'un de leurs sels, et
iv. au moins un stimulateur de défense des plantes (SDP).

12. Kit destiné à être utilisé selon la revendication 11 dans lequel
- l'acide butyrique ou un dérivé d'acide butyrique, ou de l'un de leurs sels est utilisable par aspersion d'une composition phytosanitaire comprenant de 1 à 10 mM dudit acide butyrique ou dérivé d'acide butyrique, ou l'un de leurs sels, et
- ledit stimulateur de défense des plantes (SDP) est utilisable par aspersion d'une composition comprenant ledit stimulateur de défense des plantes (SDP) dans un délai de 5 minutes à 24h après la première aspersion dudit acide butyrique ou dérivé d'acide butyrique, ou l'un de leurs sels.
